# EUROPEAN PATENT APPLICATION

(11) **EP 4 583 578 A1**
(43) Date of publication of application: **09.07.2025**
(21) Application number: 23870639.4
(22) Date of filing: 22.09.2023
(51) Int. Cl.: H04W 36/00

(54) **COMMUNICATION METHOD AND APPARATUS**

(30) Priority: 28.09.2022 CN 202211194332
(71) Applicant: Huawei Technologies Co., Ltd., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Gill Jennings & Every LLP
(86) International application number: PCT/CN2023/120791
(87) International publication number: WO 2024/067408

(57) **Abstract**

This application provides a communication method and an apparatus. The method includes: A communication apparatus determines that a terminal device performs cell handover; the communication apparatus determines that the terminal device does not complete downloading of content of an artificial intelligence model; and the communication apparatus sends a first message to a target network device, where the target network device is a network device to which the terminal device is handed over after the terminal device completes cell handover, and the first message indicates download progress of the artificial intelligence model and/or undownloaded content of the artificial intelligence model, to trigger the target network device to send the undownloaded content of the artificial intelligence model to the terminal device. **In** this way, a phenomenon that the network device repeatedly sends the artificial intelligence model to the terminal device is avoided, and overheads of air interface resources are reduced.

## Description

This application claims priority to Chinese Patent Application No. 202211194332.9, filed with the China National Intellectual Property Administration on September 28, 2022 and entitled "COMMUNICATION METHOD AND APPARATUS", which is incorporated herein by reference in its entirety.

### TECHNICAL FIELD

This application relates to the field of electronic technologies, and more specifically, to a communication method and an apparatus.

### BACKGROUND

An artificial intelligence (artificial intelligence, AI) technology is a technology that simulates the human brain to perform complex computing. With the improvement of data storage and computing capabilities, the AI technology is widely used. Currently, the 3rd generation partnership project (3rd generation partnership project, 3GPP) proposes to apply an AI model to a new radio/new radio (new radio, NR) system. With the help of intelligent data collection and analysis, network performance and user experience can be improved.

Considering a service requirement or a collaboration requirement of the NR system, a terminal device needs to download the AI model from a network device. Cell handover may occur when the terminal device moves. When the terminal device performs cell handover and the terminal device does not complete downloading of content of the AI model from a source network device, a target network device does not know how much the content of the AI model is downloaded by the terminal device. Therefore, the terminal device needs to re-download the content of the AI model from the target network device.

However, the AI model occupies a large amount of memory, usually from dozens of megabytes (MB) to hundreds of megabytes. The foregoing manner of re-downloading the AI model causes a waste of a large quantity of air interface resources.

### SUMMARY

This application provides a communication method and an apparatus, to avoid a phenomenon that a network device repeatedly sends an AI model to a terminal device, which helps save air interface resources.

According to a first aspect, this application provides a communication method. The method includes:
A communication apparatus determines that a terminal device performs cell handover;
the communication apparatus determines that the terminal device does not complete downloading of content of an artificial intelligence model; and
the communication apparatus sends a first message to a target network device, where the target network device is a network device to which the terminal device is handed over after the terminal device completes cell handover, and the first message indicates download progress of the artificial intelligence model and/or undownloaded content of the artificial intelligence model, to trigger the target network device to send the undownloaded content of the artificial intelligence model to the terminal device.

According to the communication method provided in the first aspect, in a process in which the terminal device performs cell handover or after the terminal device completes cell handover, the communication apparatus transfers the download progress of the AI model and/or the undownloaded content of the AI model to the target network device through the first message, so that the target network device can learn of how much content of the AI model is downloaded by the terminal device from the source network device (namely, the downloaded content of the AI model) and/or the content of the AI model that is not downloaded by the terminal device from the source network device (namely, the undownloaded content of the AI model). Then, after the terminal device completes cell handover, the target network device may send the undownloaded content of the AI model to the terminal device. In this way, a waste of a large quantity of air interface resources caused by repeated downloading of the AI model is avoided.

In a possible design, the communication apparatus is a source network device;
before the communication apparatus determines that the terminal device performs cell handover, the method further includes:
The source network device sends the content of the artificial intelligence model to the terminal device;
that the communication apparatus determines that the terminal device performs cell handover includes:
   The source network device determines that the terminal device performs cell handover from the source network device to the target network device;
   that the communication apparatus determines that the terminal device does not complete downloading of the content of the artificial intelligence model includes:
      The source network device determines that the terminal device does not complete downloading of the content of the artificial intelligence model; and
      that the communication apparatus sends the first message to the target network device includes:
         The source network device sends the first message to the target network device.

Therefore, when the source network device and the target network device can communicate with each other, the source network device, serving as the communication apparatus, may transfer the first message to the target network device, so that the target network device transmits the undownloaded content of the AI model to the terminal device.

In a possible design, the communication apparatus is an access and mobility management function entity;
before the communication apparatus determines that the terminal device performs cell handover, the method includes:
The access and mobility management function entity receives a second message sent by a source network device, where the second message indicates the terminal device to perform cell handover from the source network device to the target network device;
that the communication apparatus determines that the terminal device performs cell handover includes:
   The access and mobility management function entity determines, based on the second message, that the terminal device performs cell handover from the source network device to the target network device;
   before the communication apparatus determines that the terminal device does not complete downloading of the content of the artificial intelligence model, the method further includes:
      The access and mobility management function entity receives a third message sent by the source network device, where the third message indicates the download progress of the artificial intelligence model and/or the undownloaded content of the artificial intelligence model;
      that the communication apparatus determines that the terminal device does not complete downloading of the content of the artificial intelligence model includes:
         The access and mobility management function entity determines, based on the third message, that the terminal device does not complete downloading of the content of the artificial intelligence model; and
         that the communication apparatus sends the first message to the target network device includes:
            The access and mobility management function entity sends the first message to the target network device.

Therefore, when the source network device and the target network device cannot communicate with each other, the access and mobility management function entity, serving as the communication apparatus, may transfer the first message to the target network device through a notification of the source network device, so that the target network device transmits the undownloaded content of the AI model to the terminal device.

In a possible design, the communication apparatus is a primary network device, and both a source network device and the target network device are secondary network devices;
that the communication apparatus determines that the terminal device performs cell handover includes:
The primary network device determines that the terminal device performs cell handover from the source network device to the target network device;
that the communication apparatus determines that the terminal device does not complete downloading of the content of the artificial intelligence model includes:
   The primary network device determines that the terminal device does not complete downloading of the content of the artificial intelligence model; and
   that the communication apparatus sends the first message to the target network device includes:
      The primary network device sends the first message to the target network device.

Therefore, when the source network device and the target network device cannot communicate with each other, the primary network device, serving as the communication apparatus, may transfer the first message to the target network device, so that the target network device transmits the undownloaded content of the AI model to the terminal device.

According to a second aspect, this application provides a communication method. The method includes:
A target network device receives a first message sent by a communication apparatus, where the first message is sent by the communication apparatus when the communication apparatus determines that a terminal device performs cell handover and determines that the terminal device does not complete downloading of content of an artificial intelligence model, and the first message indicates download progress of the artificial intelligence model and/or undownloaded content of the artificial intelligence model; and
the target network device sends the undownloaded content of the artificial intelligence model to the terminal device.

In a possible design, the communication apparatus is a source network device; and
the first message is sent by the source network device when the source network device determines that the terminal device performs cell handover from the source network device to the target network device, and determines that the terminal device does not complete downloading of the content of the artificial intelligence model.

In a possible design, the communication apparatus is an access and mobility management function entity;
the first message is sent by the access and mobility management function entity when the access and mobility management function entity determines, based on a second message, that the terminal device performs cell handover from a source network device to the target network device, and determines, based on a third message, that the terminal device does not complete downloading of the content of the artificial intelligence model, the second message and the third message are received by the access and mobility management function entity from the source network device, the second message indicates the terminal device to perform cell handover from the source network device to the target network device, and the third message indicates the download progress of the artificial intelligence model and/or the undownloaded content of the artificial intelligence model.

In a possible design, the communication apparatus is a primary network device, and both a source network device and the target network device are secondary network devices; and
the first message is sent by the primary network device when the primary network device determines that the terminal device performs cell handover from the source network device to the target network device, and determines that the terminal device does not complete downloading of the content of the artificial intelligence model.

For beneficial effects of the communication method provided in the second aspect and the possible designs of the second aspect, refer to the beneficial effects brought by the first aspect and the possible implementations of the first aspect. Details are not described herein again.

According to a third aspect, this application provides a communication method. The method includes:
A terminal device determines to perform cell handover;
the terminal device determines that content of an artificial intelligence model is not complete downloading ofed;
the terminal device sends a first message to a target network device, where the target network device is a network device to which the terminal device is handed over after the terminal device completes cell handover, and the first message indicates download progress of the artificial intelligence model; and
the terminal device receives undownloaded content that is of the artificial intelligence model and that is sent by the target network device.

According to the communication method provided in the third aspect, when completing cell handover or after completing cell handover, the terminal device transfers the download progress of the AI model to the target network device through the first message, so that the target network device can learn of how much content (namely, the downloaded content of the AI model) of the AI model is downloaded by the terminal device from a source network device. Then, after the terminal device completes cell handover, the target network device may send the undownloaded content of the AI model to the terminal device. In this way, a waste of a large quantity of air interface resources caused by repeated downloading of the AI model is avoided.

In a possible design, before the terminal device determines to perform cell handover, the method further includes:
The terminal device receives the content of the artificial intelligence model from a source network device; and
that the terminal device determines to perform cell handover includes:
   The terminal device performs cell handover from the source network device to the target network device.

According to a fourth aspect, this application provides a communication method. The method includes:
A target network device receives a first message sent by a terminal device, where the first message is sent by the terminal device when the terminal device determines to perform cell handover and determines that content of an artificial intelligence model is not complete downloading ofed, and the first message indicates download progress of the artificial intelligence model; and
the target network device sends undownloaded content of the artificial intelligence model to the terminal device.

For beneficial effects of the communication method provided in the fourth aspect and the possible designs of the fourth aspect, refer to the beneficial effects brought by the third aspect and the possible implementations of the third aspect. Details are not described herein again.

According to a fifth aspect, this application provides a communication apparatus. The apparatus includes:
a processing module, configured to determine that a terminal device performs cell handover, where
the processing module is further configured to determine that the terminal device does not complete downloading of content of an artificial intelligence model; and
a transceiver module, configured to send a first message to a target network device, where the target network device is a network device to which the terminal device is handed over after the terminal device completes cell handover, and the first message indicates download progress of the artificial intelligence model and/or undownloaded content of the artificial intelligence model, to trigger the target network device to send the undownloaded content of the artificial intelligence model to the terminal device.

In a possible design, the communication apparatus is a source network device; and
the transceiver module is further configured to: before the communication apparatus determines that the terminal device performs cell handover, send the content of the artificial intelligence model to the terminal device; and
the processing module is configured to determine that the terminal device performs cell handover from the source network device to the target network device.

In a possible design, the communication apparatus is an access and mobility management function entity;
the transceiver module is further configured to: before the communication apparatus determines that the terminal device performs cell handover, receive a second message sent by a source network device, where the second message indicates the terminal device to perform cell handover from the source network device to the target network device;
the processing module is configured to determine, based on the second message, that the terminal device performs cell handover from the source network device to the target network device;
the transceiver module is further configured to: before the communication apparatus determines that the terminal device does not complete downloading of the content of the artificial intelligence model, receive a third message sent by the source network device, where the third message indicates the download progress of the artificial intelligence model and/or the undownloaded content of the artificial intelligence model; and
the processing module is configured to determine, based on the third message, that the terminal device does not complete downloading of the content of the artificial intelligence model.

In a possible design, the communication apparatus is a primary network device, and both a source network device and the target network device are secondary network devices; and
the processing module is configured to determine that the terminal device performs cell handover from the source network device to the target network device.

For beneficial effects of the communication apparatus provided in the fifth aspect and the possible designs of the fifth aspect, refer to the beneficial effects brought by the first aspect and the possible implementations of the first aspect. Details are not described herein again.

According to a sixth aspect, this application provides a communication apparatus. The apparatus includes:
a transceiver module, configured to receive a first message sent by the communication apparatus, where the first message is sent by the communication apparatus when the communication apparatus determines that a terminal device performs cell handover and determines that the terminal device does not complete downloading of content of an artificial intelligence model, and the first message indicates download progress of the artificial intelligence model and/or undownloaded content of the artificial intelligence model, where
the transceiver module is further configured to send the undownloaded content of the artificial intelligence model to the terminal device.

In a possible design, the communication apparatus is a source network device; and
the first message is sent by the source network device when the source network device determines that the terminal device performs cell handover from the source network device to the target network device, and determines that the terminal device does not complete downloading of the content of the artificial intelligence model.

In a possible design, the communication apparatus is an access and mobility management function entity;
the first message is sent by the access and mobility management function entity when the access and mobility management function entity determines, based on a second message, that the terminal device performs cell handover from a source network device to the target network device, and determines, based on a third message, that the terminal device does not complete downloading of the content of the artificial intelligence model, the second message and the third message are received by the access and mobility management function entity from the source network device, the second message indicates the terminal device to perform cell handover from the source network device to the target network device, and the third message indicates the download progress of the artificial intelligence model and/or the undownloaded content of the artificial intelligence model.

In a possible design, the communication apparatus is a primary network device, and both a source network device and the target network device are secondary network devices; and
the first message is sent by the primary network device when the primary network device determines that the terminal device performs cell handover from the source network device to the target network device, and determines that the terminal device does not complete downloading of the content of the artificial intelligence model.

For beneficial effects of the communication apparatus provided in the sixth aspect and the possible designs of the sixth aspect, refer to the beneficial effects brought by the first aspect and the possible implementations of the first aspect. Details are not described herein again.

According to a seventh aspect, this application provides a communication apparatus. The apparatus includes:
a processing module, configured to determine to perform cell handover, where
the processing module is further configured to determine that content of an artificial intelligence model is not complete downloading ofed; and
a transceiver module, configured to send a first message to a target network device, where the target network device is a network device to which the terminal device is handed over after the terminal device completes cell handover, and the first message indicates download progress of the artificial intelligence model, where
the transceiver module is further configured to receive undownloaded content that is of the artificial intelligence model and that is sent by the target network device.

In a possible design, the transceiver module is further configured to: before determining to perform cell handover, receive the content of the artificial intelligence model from a source network device; and
the processing module is further configured to determine to perform cell handover from the source network device to the target network device.

For beneficial effects of the communication apparatus provided in the seventh aspect and the possible designs of the seventh aspect, refer to the beneficial effects brought by the third aspect and the possible implementations of the third aspect. Details are not described herein again.

According to an eighth aspect, this application provides a communication apparatus. The apparatus includes:
a transceiver module, configured to receive a first message sent by a terminal device, where the first message is sent when the terminal device performs cell handover and determines that content of an artificial intelligence model is not complete downloading ofed, and the first message indicates download progress of the artificial intelligence model, where
the transceiver module is further configured to send undownloaded content of the artificial intelligence model to the terminal device.

For beneficial effects of the communication apparatus provided in the eighth aspect and the possible designs of the eighth aspect, refer to the beneficial effects brought by the third aspect and the possible implementations of the third aspect. Details are not described herein again.

In any one of the foregoing aspects and any possible design of the aspect, the first message includes a first bit, and the first bit indicates a location until which the content of the artificial intelligence model is downloaded.

Therefore, when both a source network device and a target network device use a non-segment-based sending manner, the first message may indicate, through the first bit, a location in the content of the AI model at which the content of the AI model needs to be downloaded when the content of the AI model is downloaded to the terminal device, so that the target network device determines how much content of the AI model is downloaded by the terminal device.

In any one of the foregoing aspects and any possible design of the aspect, the content of the artificial intelligence model includes M segments, and M is an integer greater than or equal to 2; and
the first message includes an identifier and a bit of a k^{th} segment, and k is a positive integer, where
the identifier of the k^{th} segment indicates a segment until which the content of the artificial intelligence model is downloaded, and the bit of the k^{th} segment indicates a location until which the content of the artificial intelligence model is downloaded in the k^{th} segment.

Therefore, when both the source network device and the target network device use a segment-based sending manner, and the sending manner of the source network device and the sending manner of the target network device are the same, the first message may indicate, through the identifier and the bit of the k^{th} segment, a segment in the M segments in which the content of the AI model is downloaded and a location in the k^{th} segment at which the content of the AI model is downloaded, so that the target network device determines how much content of the AI model is downloaded by the terminal device.

In any one of the foregoing aspects and any possible design of the aspect, the content of the artificial intelligence model includes M segments, and M is an integer greater than or equal to 2; and
the first message includes one or more of the following representation manners:
an identifier, a second bit, a start bit, and an end bit of each segment in a segment set; or
an identifier, a second bit, a start bit, and a total quantity of bits of each segment in a segment set; or
an identifier, a second bit, an end bit, and a total quantity of bits of each segment in a segment set, where
the segment set includes one or more segments in the M segments in which downloaded content exists, the identifier of each segment indicates each segment, and the second bit of each segment indicates a location until which the content of the artificial intelligence model is downloaded in each segment; or
the segment set includes the M segments, the identifier of each segment indicates each segment, and the second bit of each segment indicates a location until which the content of the artificial intelligence model is downloaded in each segment.

Therefore, when both the source network device and the target network device use the segment-based sending manner, and the sending manner of the source network device and the sending manner of the target network device are different, the first message may indicate, in the foregoing implementation, a segment or segments of the M segments in which the content of the AI model is downloaded and a location in a segment or locations in segments at which the content of the AI model is downloaded, or indicate each of the M segments in which the content of the AI model is downloaded and a location in each segment at which the content of the AI model is downloaded, so that the target network device determines how much content of the AI model is downloaded by the terminal device.

In any one of the foregoing aspects and any possible design of the aspect, the first message further includes an identifier of an artificial intelligence model.

Therefore, the first message may further indicate a specific AI model through the identifier of the AI model.

In any one of the foregoing aspects and any possible design of the aspect, the first message further includes a segment quantity M of the content of the artificial intelligence model.

Therefore, the first message may further indicate, through the segment quantity M of the AI model, a quantity of segments into which the content of the AI model that needs to be downloaded by the terminal device is divided.

In any one of the first aspect, the second aspect, the fifth aspect, and the sixth aspect and any possible design of the aspect, the first message includes: the undownloaded content of the artificial intelligence model; or the identifier of the artificial intelligence model and the undownloaded content of the artificial intelligence model.

Therefore, the first message may carry the undownloaded content of the artificial intelligence model, so that the target network device obtains the undownloaded content of the artificial intelligence model.

In any one of the foregoing aspects and any possible design of the aspect, transmission of the first message is performed through a signaling radio bearer or a data radio bearer.

In any one of the foregoing aspects and any possible design of the aspect, transmission of the first message is performed through the signaling radio bearer between the terminal device and the target network device;
the signaling radio bearer is one or more of a signaling radio bearer 0, a signaling radio bearer 1, a signaling radio bearer 2, a signaling radio bearer 3, or a signaling radio bearer 4; or
the signaling radio bearer is one or more signaling radio bearers other than a signaling radio bearer 0, a signaling radio bearer 1, a signaling radio bearer 2, a signaling radio bearer 3, and a signaling radio bearer 4.

Therefore, transmission of the first message may be performed by using an existing signaling radio bearer and/or a newly introduced signaling radio bearer in a related technology.

In any one of the foregoing aspects and any possible design of the aspect, transmission of the first message is performed through a data radio bearer on an air interface between the terminal device and the target network device;
establishment of the data radio bearer is initiated by the target network device after a protocol data unit session between the target network device, the terminal device, and a core network element is established; or
establishment of the data radio bearer is initiated by the target network device after the target network device receives the first message.

Therefore, transmission of the first message may be performed by using an existing data radio bearer and/or a newly established data radio bearer in the related technology.

According to a ninth aspect, this application provides a communication apparatus, where the communication apparatus includes a transceiver, a processor, and a memory. The memory stores a computer program or instructions. The processor is configured to control the transceiver to receive and send a signal, and the processor is configured to invoke and run the computer program or the instructions stored in the memory, to enable the processor to implement the communication method in any one of the foregoing aspects and the possible designs of the aspects.

According to a tenth aspect, this application provides a communication apparatus, including a processor, where the processor is configured to invoke a computer program or instructions in a memory, to enable the communication apparatus to perform the communication method in any one of the foregoing aspects and the possible designs of the aspects.

Optionally, the communication apparatus further includes a memory, and the memory is configured to store a computer program or instructions. The processor is coupled to the memory over an interface.

According to an eleventh aspect, this application provides a chip apparatus, including a processor, configured to invoke a computer program or instructions in a memory, to enable the processor to perform the communication method in any one of the foregoing aspects and the possible designs of the aspects.

Optionally, the processor is coupled to the memory over an interface.

According to a twelfth aspect, this application provides a chip, including an interface circuit and a logic circuit, where the interface circuit is configured to receive a signal from another chip other than the chip and transmit the signal to the logic circuit, or send a signal from the logic circuit to another chip other than the chip; and the logic circuit is configured to implement the communication method in any one of the foregoing aspects and the possible designs of the aspects.

According to a thirteenth aspect, this application provides a computer-readable storage medium, where the computer-readable storage medium stores a computer program or instructions, and the computer program or the instructions are set to perform the communication method in any one of the foregoing aspects and the possible designs of the aspects.

According to a fourteenth aspect, this application provides a computer program product. When the computer program product is run on a computer, the computer is enabled to perform the communication method in any one of the foregoing aspects and the possible designs of the aspects.

### BRIEF DESCRIPTION OF DRAWINGS

FIG. 1 is a diagram of a structure of a network device according to an embodiment of this application;
FIG. 2 is an application framework diagram of an AI model according to an embodiment of this application;
FIG. 3 is a diagram of an architecture of a communication network according to an embodiment of this application;
FIG. 4 is a flowchart of a communication method according to an embodiment of this application;
FIG. 5 is a flowchart of a communication method according to an embodiment of this application;
FIG. 6 is a flowchart of a communication method according to an embodiment of this application;
FIG. 7 is a flowchart of a communication method according to an embodiment of this application;
FIG. 8 is a flowchart of a communication method according to an embodiment of this application;
FIG. 9 is a flowchart of a communication method according to an embodiment of this application;
FIG. 10 is a flowchart of a communication method according to an embodiment of this application;
FIG. 11 is a diagram of an architecture of a communication network according to an embodiment of this application;
FIG. 12 is a flowchart of a communication method according to an embodiment of this application;
FIG. 13 is a diagram of a structure of a communication apparatus according to an embodiment of this application;
FIG. 14 is a diagram of a structure of a communication apparatus according to an embodiment of this application;
FIG. 15 is a diagram of a structure of a communication apparatus according to an embodiment of this application;
FIG. 16 is a diagram of a structure of a communication apparatus according to an embodiment of this application;
FIG. 17 is a diagram of a hardware structure of a communication apparatus according to an embodiment of this application; and
FIG. 18 is a diagram of a hardware structure of a communication apparatus according to an embodiment of this application.

### DESCRIPTION OF EMBODIMENTS

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance. An orientation or a position relationship indicated by the term such as "center", "vertical", "horizontal", "up", "down", "left", "right", "front", or "back" is based on an orientation or a position relationship shown in the accompanying drawings, and is merely intended to facilitate description of this application and simplify description, but does not indicate or imply that a specified apparatus or element needs to have a specific orientation and be constructed and operated in a specific orientation. Therefore, such terms should not be construed as limitations to this application.

The technical method in this application may be applied to a communication system. The communication system may include but is limited to a wireless communication system, for example, a narrowband-internet of things (narrowband-internet of things, NB-IoT) system, a wideband code division multiple access (wideband code division multiple access, WCDMA) system, a code division multiple access 2000 (code division multiple access, CDMA 2000) system, a time division-synchronization code division multiple access (time division-synchronization code division multiple access, TD-SCDMA) system, an LTE system, a 5th generation (the 5th generation, 5G) system, a 6th generation (the 6th generation, 6G) system, and a future system.

Some terms in this application are first described below, to help a person skilled in the art have a better understanding.

### 1. Terminal device

The terminal device is a device that has a wireless transceiver function. The terminal device may be a wireless terminal or a wired terminal. The wireless terminal may refer to a device that provides a user with voice and/or other service data connectivity, a handheld device with a wireless connection function, or another processing device connected to a wireless modem. The wireless terminal may communicate with one or more core networks through a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network, for example, a device like a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), an uncrewed aerial vehicle, a wearable device, or a terminal in the internet of vehicles. The wireless terminal may also be referred to as a system, a subscriber unit (subscriber unit), a subscriber station (subscriber station), a mobile station (mobile station), a remote station (remote station), a remote terminal (remote terminal), an access terminal (access terminal), a user terminal (user terminal), a user agent (user agent), a user device or user equipment (user device or user equipment), user equipment (user equipment, UE), a terminal unit, a terminal station, a remote station, a mobile device, a terminal, a wireless communication device, a terminal agent, a terminal apparatus, or the like. This is not limited herein.

The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network or a future 6G network, or a terminal device in a future evolved public land mobile network (public land mobile network, PLMN).

In addition, the terminal device may use a mobile operating system like an Android system, a Linux system, a Windows system, an iOS system, or a Harmony operating system (harmony operating system, Harmony OS). This is not limited in this application.

### 2. Network device

The network device is a device in a wireless network. Network device: The network device may be a base station, an access point, an access network device, or a device that is in an access network and that communicates with a wireless terminal through one or more sectors over an air interface (air interface for short). The network device may be configured to mutually convert a received over-the-air frame and an internet protocol (internet protocol, IP) packet and serve as a router between the wireless terminal and a rest portion of the access network, where the rest portion of the access network may include an IP network. The network device may further coordinate attribute management of the air interface. For example, the network device may be a satellite, an uncrewed aerial vehicle, a base station (base transceiver station, BTS) in global system for mobile communications (global system for mobile communications, GSM) or code division multiple access (code division multiple access, CDMA), or may be a base station (NodeB, NB) in wideband code division multiple access (wideband code division multiple access, WCDMA), or may be an evolved NodeB (evolutional NodeB, eNB, or eNodeB) in LTE, or may be a radio controller in a cloud radio access network (cloud radio access network, CRAN) scenario, a wearable device or a vehicle-mounted device, or a terminal or a relay station or an access point that undertakes a base station function in vehicle-to-everything (vehicular-to-everything, V2X) communication, device-to-device (device-to-device, D2D) communication, and machine-to-machine (machine-to-machine, M2M) communication, or a base station in a 5G network, such as a gNB, or a base station in a future 6G network, or a network device in a future evolved public land mobile network (public land mobile network, PLMN). This is not limited herein.

The network device may be a radio access network (radio access network RAN) node that enables a terminal device to access a wireless network. Currently, examples of some RAN nodes are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or integrated access and backhaul (integrated access and backhaul, IAB), or the like.

In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

It may be understood that, the RAN node is divided into the CU and the DU from the perspective of a logical function. The CU is connected to the DU over an F1 interface, and the CU representing a gNB is connected to a core network over an NG interface. The CU and the DU may be physically separated, or may be deployed together. This is not specifically limited in embodiments of this application. One CU may be connected to one DU, or a plurality of DUs may share one CU, so that costs can be reduced and network expansion is easy. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. In this application, the foregoing protocol stack division manner is not completely limited, and there may be another division manner.

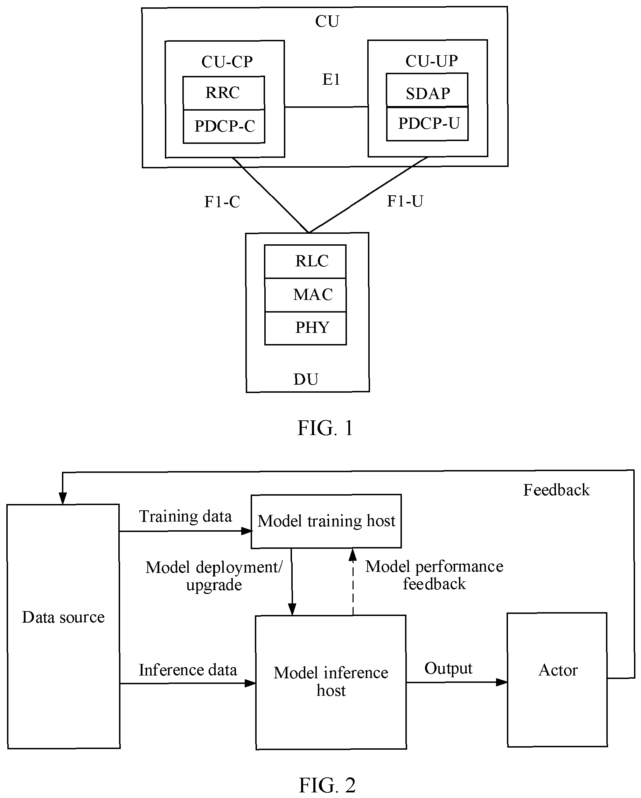

FIG. 1 is a diagram of a structure of a network device according to an embodiment of this application. As shown in FIG. 1, the network device in this application may be a central unit control plane (CU-CP) node or a central unit user plane (CU-UP) node, or the network device may be a CU-CP and a CU-UP. The CU-CP is responsible for a control plane function, and mainly includes RRC and PDCP-control (control, C). The PDCP-C is mainly responsible for data encryption and decryption, integrity protection, data transmission, and the like on the control plane. The CU-UP is responsible for a user plane function, and mainly includes an SDAP and a PDCP-user (user, U). The SDAP is mainly responsible for processing data of a core network and mapping a flow (flow) to a bearer (bearer). The PDCP-U is mainly responsible for data plane encryption and decryption, integrity protection, header compression, sequence number maintenance, data transmission, and the like. The CU-CP and the CU-UP are connected over an E1 interface. The CU-CP, representing the gNB, is connected to the core network over the NG interface. The CU-CP is connected to the DU through F1-C (control plane). The CU-UP is connected to the DU through F1-U (user plane). In another possible implementation, the PDCP-C is also disposed on the CU-UP.

The network device mentioned in this application may be a device including the CU or the DU, or a device including the CU and the DU, or a device including a control plane CU node (a CU-CP node), a user plane CU node (a CU-UP node), and the DU node.

The network device and the terminal device may be deployed on land, including an indoor scenario or an outdoor scenario, and a handheld scenario or a vehicle-mounted scenario; or may be deployed on water (such as a ship); or may be deployed on an airplane, a balloon, and a satellite in the air. Application scenarios of the network device and the terminal device are not limited in this application.

This application may be applied to downlink signal transmission, may be applied to uplink signal transmission, or may be applied to device-to-device (device-to-device, D2D) signal transmission. For the downlink signal transmission, a sending device is a network device, and a corresponding receiving device is a terminal device. For the uplink signal transmission, a sending device is a terminal device, and a corresponding receiving device is a network device. For the D2D signal transmission, a sending device is a terminal device, and a corresponding receiving device is also a terminal device. A signal transmission direction is not limited in this application.

Communication between the network device and the terminal device and communication between terminal devices may be performed by using a licensed spectrum (licensed spectrum), an unlicensed spectrum (unlicensed spectrum), or both the licensed spectrum and the unlicensed spectrum. The communication between the network device and the terminal device and the communication between the terminal devices may be performed by using a spectrum below 6 gigahertz (gigahertz, GHz), a spectrum above 6G, or both the spectrum below 6G and the spectrum above 6G. A spectrum resource used between the network device and the terminal device is not limited in this application.

In this application, a communication apparatus configured to implement a function of the network device may be a network device, or may be an apparatus that can support the network device in implementing the function, for example, a chip system. The apparatus may be installed in the network device. In the technical solutions provided in this application, an example in which the apparatus configured to implement the function of the network device is the network device is for describing the technical solutions provided in this application.

### 3. AI model

The AI model may also be referred to as an AI algorithm or an AI operator, is a general term of a mathematical algorithm built based on an AI principle, and is also a basis for resolving a specific problem by using an AI technology. A type of the AI model is not limited in this application. For example, the AI model may be a machine learning model, a deep learning model, or a reinforcement learning model.

Machine learning is a method for implementing AI. An objective of this method is to design and analyze algorithms (namely, models) that enable a computer to automatically "learn". The designed algorithms are referred to as machine learning models. The machine learning model is an algorithm that automatically analyzes data to obtain a rule and predicts unknown data by using the rule. There are various machine learning models. Depending on whether model training needs to depend on a label corresponding to training data, the machine learning models may be classified into a supervised learning model and an unsupervised learning model.

Deep learning is a new technical field generated in a machine learning research process. Specifically, deep learning is a method for performing deep representation learning on data in machine learning. Deep learning interprets data by establishing a neural network that simulates a human brain for analysis and learning. In a machine learning method, most or even all features need to be determined by an industry expert, and then the features are encoded. However, a deep learning algorithm attempts to learn features from the data, and an algorithm designed based on a deep learning idea is referred to as the deep learning model.

Reinforcement learning is a special field in machine learning, and is a process of continuously learning an optimal policy, making sequence decisions, and obtaining a maximum return through interaction between an agent (agent) and an environment (environment). Generally, the reinforcement learning is learning "what to do (that is, how to map a current scenario to an action) to maximize a digitalized benefit signal". The agent is not usually informed of what action to take, but tries to find out which actions will produce the most substantial benefits.

The reinforcement learning is different from supervised learning and unsupervised learning in the machine learning field. The supervised learning is a process of learning from externally provided labeled training data (task-driven), and the unsupervised learning is a process of searching for an implicit structure in unlabeled data (data-driven). The reinforcement learning is a process of finding a better solution through "exploration". The agent needs to develop existing experience to gain benefits, and also needs to perform exploration, so that greater action selection space can be obtained in the future (that is, learn from mistakes). An algorithm designed based on the reinforcement learning is referred to as the reinforcement learning model.

Before being used to resolve specific technical problems, the AI model needs to be trained. Training of the AI model is a process of calculating training data by using a specified initial model, and adjusting a parameter in an initial model by using a method based on a calculation result, so that the initial model gradually learns a rule and has a specific function. After training, the initial model with a stable function is the AI model, and the AI model may be used for inference. Inference of the AI model is a process of calculating input data by using a trained AI model, to obtain a predicted inference result (also referred to as output data).

### 4. Application framework of an AI model in NR

Currently, a study item (study item, SI) is passed in a release R17 (Release 17) of the 3GPP, which proposes that AI may be applied to an NR system, to improve network performance and user experience through intelligent data collection and analysis.

FIG. 2 is an application framework diagram of an AI model according to an embodiment of this application. As shown in FIG. 2, the 3GPP preliminarily defines a case in which an application framework of the AI model in an NR system includes the following content.

A data source (data source) is used to implement data collection (data collection), and may store data from one or more network entities such as a gNB, a gNB-CU, a gNB-DU, a terminal device, or another management entity. A data source entity is used as a database for training and inference of the AI model.

A model training host (model training host) may provide the optimal AI model, namely, model deployment/update (model deployment/update) in FIG. 2 by analyzing training data (training data) provided by the data source.

A model inference host (model inference host) provides AI model-based proper prediction on network running or guides a network to perform policy adjustment by using the AI model based on inference data (inference data) provided by the data source.

In this way, the model inference host may transmit model performance feedback (model performance feedback) in FIG. 2 to the model training host.

The model inference host may also transmit, to an actor (actor), a related adjusted policy, that is, an output (output), which is uniformly planned by the actor (actor) and sent to a plurality of network entities for running. In addition, after the network entities apply the adjusted policy, specific performance of the network entity, namely, a feedback (feedback), is input into the data source again, and the data source stores the feedback.

### 5. Application scenario/use case (use case) of an AI model or a function of an AI model

Some basic application scenarios are designed in 3GPP for application of the AI model on a RAN side, such as channel state information reference signal (channel status information reference signal, CSI-RS) feedback enhancement (feedback enhancement), beam sweeping enhancement (beam management enhancement), and positioning enhancement (positioning accuracy enhancement).

The following separately describes the foregoing several application scenarios. If the terminal device supports an application scenario of a specific AI model, it may also be considered that the terminal device has the function of the AI model.

### 5.1. CSI-RS feedback enhancement

The channel state information (channel status information, CSI) is a channel attribute of a communication link, and is channel quality information reported by the terminal device to a network device. The terminal device reports downlink CSI to the network device, so that the network device can select a more proper modulation and coding scheme (modulation and coding scheme, MCS) for the terminal device. In this way, this can better adapt to a transformed radio channel.

The CSI reported by the terminal device may include one or more of the following information:
a channel quality indicator (channel quality indicator, CQI), a precoding matrix indicator (precoding matrix indicator, PMI), a CSI-RS resource indicator (CSI-RS resource indicator, CRI), an SS/PCH block resource indicator (SS/PBCH block resource indicator, SSBRI), a layer indicator (layer indicator, LI), a rank indicator (rank indicator, RI), or a layer 1 reference signal received power (layer 1 reference signal receiver power, L1-RSRP). A rank (rank) is a rank in an antenna matrix in a multi-input multi-output (multi-input multi-output, MIMO) scheme, and represents one or more parallel valid data streams. The RI indicates a quantity of valid data layers of a downlink data channel (physical downlink shared channel, PDSCH).

The CSI-RS feedback enhancement may further include sub-scenarios such as CSI compression, CSI prediction, and CSI-RS configuration signaling reduction. The CSI compression may further include compression in at least one of space domain, time domain, or frequency domain.

CSI-RS compression is used as an example, and an implementation procedure is as follows.
(1) A dictionary (dictionary) is exchanged between the network device and the terminal device.
   Generally, the network device may train the AI model in advance based on factors such as a capability of the terminal device and a requirement of the network device. For example, the AI model may include tools such as an encoder (encoder) network and a corresponding quantizer (quantizer) network. In this way, the network device may send one encoder network to the terminal device, and may further send the quantizer network to the network device. The quantizer network is configured to perform quantization processing on a compressed signal.
(2) The terminal device compresses and quantizes a to-be-fed-back matrix based on a measured downlink channel matrix and an existing dictionary, and sends a compression and quantization result to the network device.

For example, the terminal device may input the measured downlink channel matrix into the encoder network, to obtain a first matrix output by the encoder network. Alternatively, the terminal device may preprocess the measured downlink channel matrix, and then input the preprocessed downlink channel matrix into the encoder network, to obtain a first matrix output by the encoder network.

Further, the terminal device may compress the first matrix by using an existing dictionary, and may perform quantization processing on the compressed signal by using the quantizer network, and then send a compression and quantization result to the network device.

(3) The network device reversely restores the original downlink channel matrix based on the dictionary, the decoder network, and the compression and quantization result sent by the terminal device.

### 5.2. Beam sweeping enhancement

AI model-based beam management enhancement may include sub-scenarios such as beam sweeping matrix prediction and optimal beam prediction.

An implementation procedure of the beam management enhancement is as follows.
(1) Generation of an initial model: A specific quantity of terminal devices perform omnidirectional beam sweeping on a synchronization signal and physical broadcast channel (physical broadcast channel, PBCH) block (synchronization signal and PBCH block, SSB), and these terminal devices may send sweeping results to the network device. For example, the sweeping results may include received signal quality information on each beam. The network device may perform training based on the sweeping results of these terminal devices, to obtain a sparse sweeping matrix, or referred to as a sparse model. Such a matrix is usually unique to a cell. The sparse model may include information about an optimal beam.
(2) The network device sends the sparse model to the terminal device (which may be sent through a system information block (system information block, SIB) message or the like). The terminal device may perform beam sweeping in a phase P1 based on the sparse matrix, and the terminal device may send a sweeping result to the network device. The sweeping result is, for example, referred to as a sparse sweeping result. In the phase P1, the network device sends a reference signal in a wide range through a beam, and the terminal device selects the optimal beam based on measurement, and sends the information about the optimal beam to the network device.
(3) The network device infers an optimal CSI-RS beam based on the sparse sweeping result of the terminal device.

For example, the network device may perform P2 sweeping on the terminal device based on the beam, and the terminal device may send an identifier of the optimal beam to the network device. P2 sweeping means that the network device sends a reference signal in a narrow range through a narrow beam, and the terminal device selects the optimal beam based on measurement, and sends the information (for example, an ID of a CSI-RS beam) about the optimal beam to the network device.

### 5.3. Positioning enhancement

AI model-based positioning enhancement mainly aims to improve positioning accuracy.

An implementation procedure of positioning accuracy enhancement is as follows.
(1) Raw data is collected by using an operator-controlled reference (reference) terminal device. For example, the raw data includes information such as coordinate information of the terminal device and/or a line of sight (line of sight, LOS)/non-line of sight (non-line of sight, NLOS) state.
(2) A non-RAN-side network entity, such as a location management function (location management function, LMF), and the network device separately train the AI model. The AI model trained by the LMF may be configured to infer final positioning information (for example, information such as a longitude and a latitude of the terminal device) of the terminal device based on the raw data, and the model trained by the network device may be configured to infer a LOS/NLOS determining result based on the raw data.

### 6. Collaboration level (collaboration level) of an AI model

Considering factors such as deployment of the AI model and interaction between a terminal device and a network device, currently, three collaboration levels may be included: a level 0 (level 0), a level 1 (level 1), and a level 2 (level 2), which are separately described below.

The level 0, also referred to as a collaboration level 0, means no collaboration (no collaboration)
At the level 0, the AI model of the network device may be completely invisible to the terminal device. Training and inference of the AI model are completed inside the network device, and an air interface is not affected.

The level 1, also be referred to as a collaboration level 1, means signaling-based collaboration without model transfer (signaling-based collaboration without model transfer).

At the level 1, the network device sends a dictionary to the terminal device, so that the terminal device can assist the network device in inference of the AI model, which affects the air interface to some extent. The AI model may also be deployed inside the terminal device, and the terminal device performs channel compression encoding on a downlink channel matrix through the AI model and the dictionary. The terminal device and the network device may jointly train the AI model, for example, in a federated learning manner. On the air interface, transmission of the AI model is not directly performed between the terminal device and the network device, but transmission of a parameter, a weight, and the like of the AI model may be performed.

In addition, considering deployment of the AI model, the level 1 may also be divided into a level 1A and a level 1B.

Level 1A: signaling-based collaboration for single-sided model without model transfer (signaling-based collaboration for single-sided model without model transfer).

Level 1B: signaling-based collaboration for two-sided model without model transfer (signaling-based collaboration for two-sided model without model transfer).

Level 2, also referred to as a collaboration level 2, means signaling-based collaboration with model transfer (signaling-based collaboration with model transfer).

At the level 2, the AI model is deployed on both the terminal device and the network device, and the terminal device and the network device may perform a process like inference based on the deployed AI model. On the air interface, transmission of the AI model can be directly performed between the terminal device and the network device.

A biggest difference between the level 2 and the level 1 is that transmission of the AI model can be directly performed at the level 2.

In addition to the foregoing three collaboration levels, another collaboration level may be further included. For example, a future communication system may further support some collaboration levels. This is not limited in embodiments of this application.

It should be understood that, this application relates to a problem that the terminal device can download the AI model from the network device at the level 2.

### 7. Delivery of an AI model

A terminal device needs to use a function of the AI model, and the terminal device needs to download the AI model from a network device, so that the terminal device can implement a function of the AI model. The foregoing process may include two cases.

Case 1: The terminal device needs to independently complete a specific service based on the AI model, for example, perform AI model-based encoding on a CSI channel.

Case 2: The terminal device needs to assist the network device in completing inference or training of the AI model. For example, no AI model is deployed in the terminal device, or the terminal device needs to update the AI model.

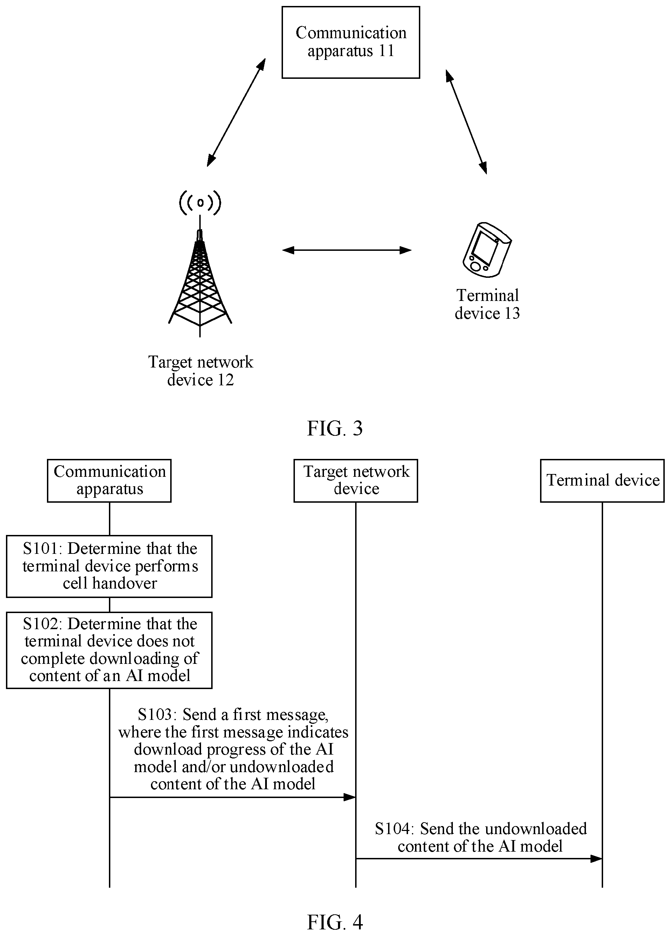

FIG. 3 is a diagram of an architecture of a communication network according to an embodiment of this application. A communication apparatus 11 may communicate with a target network device 12. For example, the communication apparatus 11 may trigger the target network device 12 to send content of an AI model to a terminal device 13. The target network device 12 may further communicate with the terminal device 13. For example, the target network device 12 may send the content of the AI model to the terminal device 13.

A specific implementation of the communication apparatus 11 is not limited in this application.

In some embodiments, the communication apparatus 11 may be the network device mentioned above. Alternatively, the communication apparatus 11 may be a functional module included in the network device mentioned above, for example, a CU, a CU-CP, or a CU-CP 2. Alternatively, the communication apparatus 11 may be a large device in the network device mentioned above, for example, a RAN node.

In some other embodiments, the communication apparatus 11 may be a core network element that can communicate with the network device, for example, an access and mobility management function (access and mobility management function, AMF) entity. The network element mentioned in this application is a network function (network function, NF) entity or a network entity.

It should be understood that, the communication apparatus 11 includes but is not limited to the foregoing implementations.

For the target network device 12, refer to the foregoing descriptions of the network device mentioned above. For the terminal device 13, refer to the foregoing descriptions of the terminal device mentioned above. For the AI model, refer to the foregoing descriptions of the AI model mentioned above. Details are not described herein again.

In the following embodiments of this application, a communication method provided in this application is described in detail below with reference to the accompanying drawings and application scenarios by using the communication apparatus 11, the target network device 12, and the terminal device 13 that have the structure shown in FIG. 3 as an example.

FIG. 4 is a flowchart of a communication method according to an embodiment of this application. As shown in FIG. 4, the communication method provided in this application may include the following steps.

S101: A communication apparatus determines that a terminal device performs cell handover.

The communication apparatus may determine, through the communication apparatus or another device, that the terminal device performs cell handover.

That the terminal device performs cell handover may be understood as that the terminal device may move from a coverage area of one cell to a coverage area of another cell due to movement of the terminal device. To ensure service continuity and communication quality, the terminal device needs to perform cell handover. In this way, the terminal device may perform cell handover.

For a specific implementation of the terminal device, refer to the foregoing descriptions of the terminal device mentioned above. Details are not described herein again.

S102: The communication apparatus determines that the terminal device does not complete downloading of content of an AI model.

In an application scenario in which the terminal device cannot support the AI model based on downloaded content of the AI model, or the terminal device does not have a function of the AI model based on the downloaded content of the AI model, the communication apparatus may determine that the terminal device does not complete downloading of the content of the AI model.

In other words, the communication apparatus may determine that the terminal device does not complete downloading of the content of the AI model that needs to be downloaded by the terminal device.

The content of the AI model that needs to be downloaded by the terminal device may be some content of the AI model, or may be all the content of the AI model. This is not limited in this application.

In addition, the content of the AI model that needs to be downloaded by the terminal device may be classified into content of the AI model downloaded by the terminal device (namely, downloaded content of the AI model) and content of the AI model that is not downloaded by the terminal device (namely, undownloaded content of the AI model).

For example, when the terminal device needs to implement one or more services based on the AI model, the terminal device cannot implement one or more services based on the downloaded content of the AI model. In this case, the communication apparatus may determine that the terminal device does not complete downloading of the content of the AI model.

For another example, when the terminal device needs to assist a target network device in completing inference or training of the AI model, the terminal device cannot assist, based on the downloaded content of the AI model, the target network device in completing inference or training of the AI model. In this case, the communication apparatus may determine that the terminal device does not complete downloading of the content of the AI model.

The target network device is a network device to which the terminal device is handed over after the terminal device completes cell handover. In other words, when the terminal device completes cell handover or after the terminal device completes cell handover, the terminal device successfully accesses the target network device, so that the terminal device and the target network device can communicate with each other. For a specific implementation of the target network device, refer to the foregoing descriptions of the network device mentioned above. Details are not described herein again.

It should be understood that, S101 and S102 are not subject to a time sequence, and S101 and S102 may be simultaneously performed, or may be sequentially performed.

S103: The communication apparatus sends a first message to the target network device, where the first message indicates download progress of the AI model and/or the undownloaded content of the AI model.

Based on the descriptions of S101 and S102, when it is determined that the terminal device performs cell handover and that the terminal device does not complete downloading of the content of the AI model, the communication apparatus may send the first message to the target network device in a process in which the terminal device performs cell handover or after the terminal device completes cell handover, so that the communication apparatus can transfer the download progress of the AI model to the target network device through the first message, and the target network device can learn of the downloaded content of the AI model, and/or can transfer the undownloaded content of the AI model to the target network device through the first message. In this way, the target network device can learn of the undownloaded content of the AI model.

The first message may indicate the undownloaded content of the AI model. In this way, it is fully considered that the target network device may not store the undownloaded content of the AI model.

Alternatively, the first message may indicate the download progress of the AI model. The download progress of the AI model may be determined based on the downloaded content of the AI model. In this way, information transmission is convenient, and transmission resources are reduced.

Alternatively, the first message may indicate the undownloaded content of the AI model and the download progress of the AI model. In this way, the information transmission is ensured in two aspects.

S104: The target network device sends the undownloaded content of the AI model to the terminal device.

Based on the first message in S103, after the terminal device completes cell handover, the target network device may send the undownloaded content of the AI model to the terminal device. In this way, a waste of a large quantity of air interface resources caused by repeated downloading of the AI model is avoided.

The target network device may pre-store the content of the AI model that needs to be downloaded by the terminal device, and then the target network device may obtain the undownloaded content of the AI model. Alternatively, the communication apparatus may send the undownloaded content of the AI model to the target network device. Alternatively, the target network device may obtain the undownloaded content of the AI model from another network element other than the communication apparatus.

According to the communication method provided in this application, in a process in which the terminal device performs cell handover or after the terminal device completes cell handover, the communication apparatus transfers the download progress of the AI model and/or the undownloaded content of the AI model to the target network device through the first message, so that the target network device can learn of how much content of the AI model is downloaded by the terminal device from a source network device (namely, the downloaded content of the AI model) and/or the content of the AI model that is not downloaded by the terminal device from the source network device (namely, the undownloaded content of the AI model). Then, after the terminal device completes cell handover, the target network device may send the undownloaded content of the AI model to the terminal device. In this way, a waste of a large quantity of air interface resources caused by repeated downloading of the AI model is avoided.

Based on the descriptions of the foregoing embodiment, several implementations of the first message are described in detail.

When the first message indicates the download progress of the AI model, it is considered that a manner 1 in which the target network device sends the undownloaded content of the AI model to the terminal device may be the same as or different from a manner 2 in which the source network device sends the downloaded content of the AI model to the terminal device. Therefore, the first message may indicate the download progress of the AI model in a plurality of manners.

The source network device is a network device in a cell in which the terminal device is located before the terminal device performs cell handover. In other words, in a process in which the terminal device performs cell handover and before the terminal device performs cell handover, the terminal device successfully accesses the source network device, so that the terminal device and the source network device can communicate with each other. When the terminal device completes cell handover or after the terminal device completes cell handover, the terminal device cannot successfully access the source network device, so that the terminal device and the source network device cannot communicate with each other.

The source network device and the target network device are different network devices. For a specific implementation of the source network device, refer to the foregoing descriptions of the network device mentioned above. Details are not described herein again.

Based on the foregoing descriptions, the source network device may provide the downloaded content of the AI model for the terminal device, that is, the terminal device downloads the downloaded content of the AI model from the source network device.

When both the manner 1 and the manner 2 are non-segment-based sending manners, the first message may include a first bit.

The first bit indicates a location until which the content of the AI model is downloaded. In other words, the first bit indicates a location of the downloaded content of the AI model in the content that is of the AI model and that needs to be downloaded by the terminal device.

In addition, the first message may further include an identifier of the AI model (model ID). The identifier of the AI model indicates a type of the AI model, and the identifier of the AI model can uniquely determine the AI model. The identifier of the AI model may be represented in a manner such as an identity document (identity document, ID) or a number of the AI model.

For example, a parameter structure of the first message may indicate the download progress of the AI model by using Table 1. In Table 1, "O" represents an optional parameter. "M" represents a mandatory parameter. INTEGER (0...4095) represents that a value range is 0 to 4095. INTEGER (0...262143) represents that a value range is 0 to 262143. INTEGER is an integer.

**Table 1**

| Information element/Group name | Presence (presence) | Information element reference type | Semantics description |
|---|---|---|---|
| Download progress of an AI model | O | | |
| >ID of the AI model | M | INTEGER (0...4095) | |
| >Select a segment manner | M | | |
| >>Manner 1 | | | Both the manner 1 and the |
| | | | manner 2 are non-segment-based sending manners |
| >>>First bit | | INTEGER (0...262143) | |

An English name of an information element is IE, and a corresponding English full name is information element. An English full name of a group name is group name. An English full name of a reference type is type and reference. An English full name of semantics description is semantics description.

When both the manner 1 and the manner 2 are segment-based sending manners, and the manner 1 is the same as the manner 2, the content of the AI model that needs to be downloaded by the terminal device may include M segments, where M is an integer greater than or equal to 2. A specific value of M is not limited in this application.

It may be learned that, the first message may include an identifier and a bit of a k^{th} segment, where k is a positive integer.

The identifier of the k^{th} segment indicates a segment until which the content of the AI model is downloaded, and the bit of the k^{th} segment indicates a location until which the content of the AI model is downloaded in the k^{th} segment.

In other words, the identifier of the k^{th} segment indicates that a segment until which the downloaded content of the AI model is located in the M segments is the k^{th} segment. The bit of the k^{th} segment indicates a location until which the downloaded content of the AI model is located in the k^{th} segment.

In addition, the first message may further include the identifier of the AI model. For a specific implementation of the identifier of the AI model, refer to the foregoing descriptions of the identifier of the AI model mentioned above. Details are not described herein again.

In addition, the first message may further include a segment quantity M of the content of the AI model.

For example, a parameter structure of the first message may indicate the download progress of the AI model by using Table 2. In Table 2, "O" represents an optional parameter. "M" represents a mandatory parameter. INTEGER (0...4095) represents that a value range is 0 to 4095. INTEGER INTEGER (1...32, ...) represents that a value range is 0 to 32. INTEGER is an integer.

**Table 2**

| Information element/Group name | Presence (presence) | Information element reference type | Semantics description |
|---|---|---|---|
| Download progress of an AI model | O | | |
| >ID of the AI model | M | INTEGER (0...4095) | |
| >Select a segment manner | M | | |
| >>Manner 2 | | | Both the manner 1 and the manner 2 are segment-based sending manners, and the manner 1 is the same as the manner 2 |
| >>>Total quantity of segments | M | | INTEGER (1...32, ...) |
| >>>Identifier of a k^{th} segment | M | | INTEGER (1...32, ...) |
| >>>Bit of the k^{th} segment | M | | INTEGER (0...4095) |

When both the manner 1 and the manner 2 are segment-based sending manners, and the manner 1 is different from the manner 2, the content of the AI model that needs to be downloaded by the terminal device may include M segments, where M is an integer greater than or equal to 2. A specific value of M is not limited in this application.

It may be learned that, the first message may include one or more of the following representation manners:
an identifier, a second bit, a start bit, and an end bit of each segment in a segment set; or
an identifier, a second bit, a start bit, and a total quantity of bits of each segment in a segment set; or
an identifier, a second bit, an end bit, and a total quantity of bits of each segment in a segment set.

The start bit of each segment indicates a start location in each segment. The end bit of each segment indicates an end location in each segment. The total quantity of bits of each segment indicates a total quantity of bits of each segment from the start location to the end location and including the start location and the end location.

In this application, the segment set may be represented in a plurality of manners.

In some embodiments, the segment set may include one or more segments in the M segments in which downloaded content exists, the identifier of each segment indicates each segment, and the second bit of each segment indicates a location until which the content of the AI model is downloaded in each segment.

In other words, the segment set may include one or more segments in which the downloaded content of the AI model exists in the M segments. The identifier of each segment indicates each segment included in the segment set. The second bit of each segment indicates a location of the downloaded content existing in each segment at which the downloaded content of the AI model is located.

For example, it is assumed that the M segments include a segment 1, a segment 2, a segment 3, and a segment 4. If segments of the downloaded content of the AI model in the downloaded content existing in the M segments include the segment 1, the segment 2, and the segment 4, the segment set may include the segment 1, the segment 2, and the segment 4.

In some other embodiments, the segment set may include the M segments, the identifier of each segment indicates each segment, and the second bit of each segment indicates a location until which the content of the AI model is downloaded in each segment.

In other words, the segment set may include the M segments. The identifier of each segment indicates each segment included in the segment set, namely, each segment in the M segments. The second bit of each segment indicates a location of the downloaded content existing in each segment at which the downloaded content of the AI model is located.

For example, it is assumed that the M segments include a segment 1, a segment 2, a segment 3, and a segment 4. In this case, the segment set may include the segment 1, the segment 2, the segment 3, and the segment 4.

In addition, when the downloaded content of the AI model does not exist in any segment, the second bit of the segment may be represented by using a start bit of the segment, or may be represented in an empty manner, or may be represented in a fixed manner of one or more bits. This is not limited in this application.

In this way, the segment set may be represented in the foregoing two manners, but this application is not limited to the foregoing two manners.

In addition, in any one of the foregoing representation implementations of the first message, the first message may further include the identifier of the AI model. For a specific implementation of the identifier of the AI model, refer to the foregoing descriptions of the identifier of the AI model mentioned above. Details are not described herein again.

In addition, in any one of the foregoing representation manners of the first message, the first message may further include a segment quantity M of the content of the AI model.

For example, a parameter structure of the first message may indicate the download progress of the AI model by using Table 3. In Table 3, "O" represents an optional parameter. "M" represents a mandatory parameter. INTEGER (0...4095) represents that a value range is 0 to 4095. INTEGER INTEGER (1...32, ...) represents that a value range is 0 to 32. INTEGER is an integer.

**Table 3**

| Information element/Group name | Presence (presence) | IE reference type | Semantics description |
|---|---|---|---|
| Download progress of an AI model | O | | |
| >ID of the AI model | M | INTEGER (0...4095) | |
| >Select a segment manner | M | | |
| >>Manner 3 | | | Both the manner 1 and the manner 2 are segment-based sending manners, and the manner 1 is different from the manner 2 |
| >>>Total quantity of segments | M | | INTEGER (1...32, ...) |
| >>>Identifier of each segment in a segment set | M | | INTEGER (1...32, ...) |
| >>>Start bit of each segment in the segment set | M | | INTEGER (0...4095) |
| >>>End bit of each segment in the segment set | M | | INTEGER (0...4095) |
| >>>Second bit of each segment in the segment set | M | | INTEGER (0...4095) |

In conclusion, the first message may indicate the download progress of the AI model in the foregoing three manners. However, this application is not limited to the foregoing three manners.

When the first message indicates the undownloaded content of the AI model, the first message may include the undownloaded content of the AI model. Alternatively, the first message may include the identifier of the AI model and the undownloaded content of the AI model.

For a specific implementation of the identifier of the AI model, refer to the foregoing descriptions of the identifier of the AI model mentioned above. Details are not described herein again.

For example, a parameter structure of the first message may indicate the undownloaded content of the AI model by using Table 4. In Table 4, "O" represents an optional parameter. "M" represents a mandatory parameter. INTEGER (0...4095) represents that a value range is 0 to 4095. A container (container) is used to store the undownloaded content of the AI model. INTEGER is an integer.

**Table 4**

| Information element/Group name | Presence (presence) | IE reference type | Semantics description |
|---|---|---|---|
| Undownloaded content of an AI model | O | | |
| >ID of the AI model | M | INTEGER (0...4095) | |
| >Undownloaded content of the AI model | M | Container | Undownloaded content of the AI model |

In conclusion, the first message may indicate the undownloaded content of the AI model in the foregoing manner. However, this application is not limited to the foregoing manner. For example, the undownloaded content of the AI model may also be represented by using the bit mentioned above.

It should be understood that, when the first message indicates the download progress of the AI model and/or the undownloaded content of the AI model, if the communication apparatus and the target network device negotiate in advance a type of the AI model that needs to be downloaded by the terminal device, or specifies in a protocol a type of the AI model that needs to be downloaded by the terminal device, the first message may not carry the identifier of the AI model, or the first message may not carry the segment quantity M of the AI model.

Based on the descriptions of the foregoing embodiment, several implementations of the communication apparatus are described in detail.

When the communication apparatus is the source network device, there is a communication interface between the source network device and the target network device, so that the source network device and the target network device can communicate with each other.

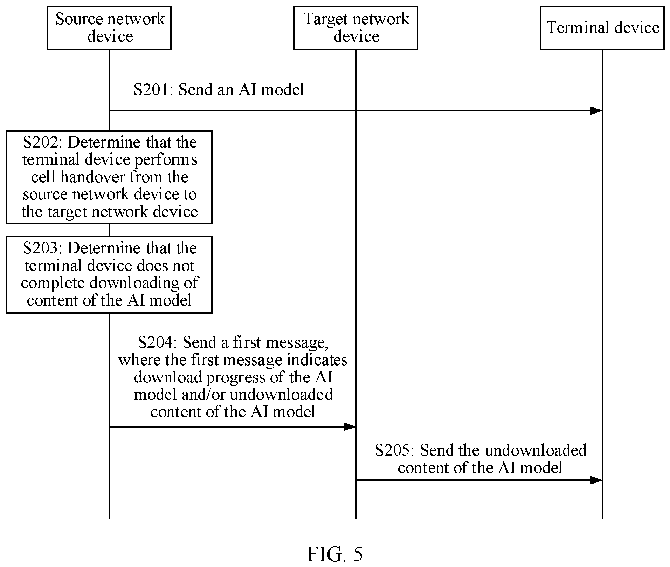

With reference to FIG. 5, the following describes a specific process in which the source network device implements the communication method in this application.

FIG. 5 is a flowchart of a communication method according to an embodiment of this application. As shown in FIG. 5, the communication method provided in this application may include the following steps.

S201: A source network device sends an AI model to a terminal device.

Before the terminal device performs cell handover, the source network device serves as a network device that provides content of the AI model for the terminal device, and the source network device may send the content of the AI model to the terminal device.

In this way, the source network device can learn whether the terminal device performs cell handover, and the source network device can determine whether the terminal device does not complete downloading of the content of the AI model.

S202: The source network device determines that the terminal device performs cell handover from the source network device to a target network device.

Based on the descriptions of S201, the source network device may determine that the terminal device performs cell handover from the source network device to the target network device.

S203: The source network device determines that the terminal device does not complete downloading of the content of the AI model.

Based on the descriptions of S201, the source network device may determine whether transmission of the content of the AI model needed by the terminal device to the terminal device is completed, to determine that the terminal device does not complete downloading of the content of the AI model.

The source network device may determine, in a plurality of manners, whether the terminal device does not complete downloading of the content of the AI model.

In some embodiments, the source network device may determine, based on a context of the terminal device, whether transmission of the content of the AI model that needs to be downloaded by the terminal device to the terminal device is completed.

For example, the context of the terminal device may include an identifier indicating whether transmission of the content of the AI model that needs to be downloaded by the terminal device to the terminal device is completed. A specific implementation of the identifier is not limited in this application.

When the identifier indicates that transmission of the content of the AI model that needs to be downloaded by the terminal device to the terminal device is completed, the source network device may determine that transmission of the content of the AI model that needs to be downloaded by the terminal device to the terminal device is completed. In this way, the source network device may determine that the terminal device does not complete downloading of the content of the AI.

For another example, the context of the terminal device may include the downloaded content of the AI model.

When the downloaded content of the AI model is some content of the AI model that needs to be downloaded by the terminal device, the source network device may determine that transmission of the content of the AI model that needs to be downloaded by the terminal device to the terminal device is completed. In this way, the source network device may determine that the terminal device does not complete downloading of the content of the AI.

It should be understood that, in addition to the foregoing implementations, the source network device may further determine, in another manner, whether the terminal device does not complete downloading of the content of the AI model.

S204: The source network device sends a first message to the target network device.

An implementation of S204 is similar to the implementation of S103 in the embodiment shown in FIG. 4. Details are not described herein again in this application.

S205: The target network device sends undownloaded content of the AI model to the terminal device.

An implementation of S205 is similar to the implementation of S104 in the embodiment shown in FIG. 4. Details are not described herein again in this application.

In this application, the source network device may serve as a communication apparatus, and transfer download progress of the AI model and/or the undownloaded content of the AI model to the target network device through the first message, so that the target network device can send the undownloaded content of the AI model to the terminal device.

It should be understood that, that the target network device is a base station is used as example, and the foregoing technical solution is applicable to various handover scenarios such as inter-gNB Xn handover, inter-gNB NG handover, MgNB handover, and SgNB handover.

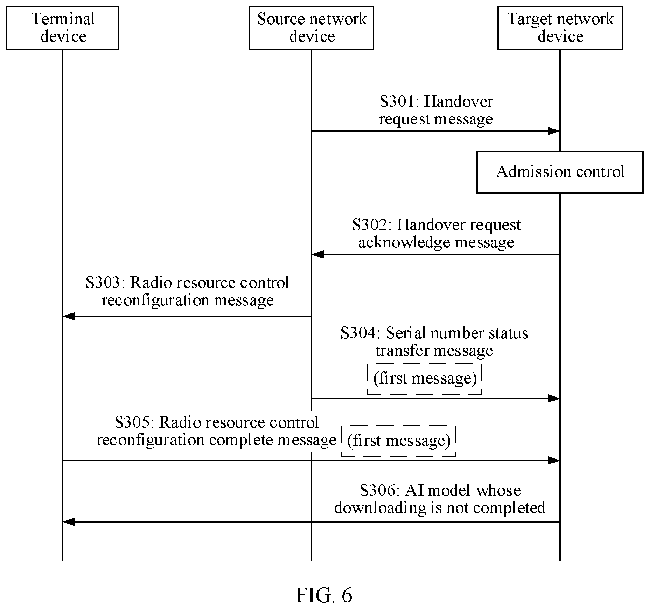

In a specific embodiment, an inter-gNB Xn handover procedure is described with reference to FIG. 6.

FIG. 6 is a flowchart of a communication method according to an embodiment of this application.

In FIG. 6, there is an Xn link between a source network device and a target network device. Therefore, the source network device and the target network device can communicate with each other.

As shown in FIG. 6, when a terminal device is in an RRC connected mode, the inter-gNB Xn handover procedure may include the following steps.

S301: The source network device sends a handover request (handover request) message to the target network device through the Xn link.

The source network device may determine that the terminal device performs cell handover. The target network device is a target network device in which a target cell selected by the terminal device is located. The handover request message is used to initiate a cell handover request.

S302: After performing admission control (admission control), the target network device sends a handover request acknowledge (handover request acknowledge) message to the source network device through the Xn link.

The handover request acknowledge message indicates that the cell handover is allowed.

It should be understood that, if some protocol data unit (protocol data unit, PDU) sessions (sessions) fail to be handed over, the handover request acknowledge message needs to carry a list (list) of failed PDU sessions.

S303: The source network device sends a radio resource control reconfiguration (RRC reconfiguration) message to the terminal device.

The radio resource control reconfiguration message is used to request the terminal device to be handed over to the target cell.

S304: The source network device sends a serial number status transfer (SN (serial number) status transfer) message to the target network device through the Xn link.

The source network device may determine, based on a context of the terminal device, whether transmission of content of an AI model that needs to be downloaded by the terminal device to the terminal device is completed, to determine whether the terminal device completes downloading of the content of the AI model.

When determining that the terminal device does not complete downloading of the content of the AI model, the source network device sends the first message to the target network device.

In some embodiments, the serial number status transfer message may indicate the download progress of the AI model and/or the undownloaded content of the AI model. In this case, the serial number status transfer message may be considered as the first message mentioned above, or the serial number status transfer message includes the first message mentioned above.

The serial number status transfer message may reuse the serial number status transfer message in a related technology, and a serial number status transfer message indicating a meaning of the download progress of the AI model and/or the undownloaded content of the AI model is newly added.

In some other embodiments, the source network device may send the serial number status transfer message and the newly added message to the target network device. The newly added message may indicate the download progress of the AI model and/or the undownloaded content of the AI model. In this case, the newly added message may be considered as the first message mentioned above, or the new message includes the first message mentioned above.

When determining that the terminal device completes downloading of the content of the AI model, the source network device may transfer, to the target network device, the content of the AI model whose downloading is completed by the terminal device, so that the target network device can learn that the content of the AI model does not need to be transmitted to the terminal device.

Alternatively, when determining that the terminal device completes downloading of the content of the AI model, the source network device may not transfer, to the target network device, the content of the AI model whose downloading is completed by the terminal device, so that the target network device does not need to transmit the content of the AI model to the terminal device by default.

S305: The terminal device sends a radio resource control reconfiguration complete (RRC reconfiguration complete) message to the target network device. In this way, the terminal device completes handover to the target cell on an air interface.

The terminal device completes cell handover from the source network device to the target network device. In this way, when the terminal device completes cell handover or after the terminal device completes cell handover, the terminal device successfully accesses the target network device, so that the terminal device and the target network device can communicate with each other.

S306: When receiving the serial number status transfer message or the newly added message in S304 that indicates the download progress of the AI model and/or the undownloaded content of the AI model, the target network device sends, after the terminal device completes cell handover, an AI model (namely, the undownloaded content of the AI model) that is not complete downloading ofed to the terminal device.

In addition, when receiving the serial number state transfer message or the newly added message in S304 that indicates that the terminal device completes downloading of the content of the AI model, the target network device may determine that the terminal device completes downloading of the content of the AI model. In this way, the target network device does not need to perform S306.

Alternatively, when the target network device does not receive the serial number status transfer message and the newly added message in S304 that indicate the download progress of the AI model and/or the undownloaded content of the AI model, the target network device may determine that the terminal device completes downloading of the content of the AI model. In this way, the target network device does not need to perform S306.

In conclusion, in the inter-gNB Xn handover procedure, when determining that the terminal device performs cell handover and that transmission of the content of the AI model that needs to be downloaded by the terminal device to the terminal device is completed, the source network device may transfer the download progress of the AI model and/or the undownloaded content of the AI model to the target network device through the serial number status transfer message and/or the newly added message, so that the target network device can learn of how much content of the AI model and/or the undownloaded content of the AI model are/is downloaded by the terminal device from the source network device before the terminal device performs cell handover.

In this way, after the terminal device completes cell handover, the target network device may continue to transmit the undownloaded content of the AI model to the terminal device, to avoid a waste of air interface resources caused by re-downloading of the AI model.

When the communication apparatus is an AMF, there is no communication interface between the source network device and the target network device, so that the source network device and the target network device cannot directly communicate with each other. In this way, the AMF may serve as a communication bridge between the source network device and the target network device.

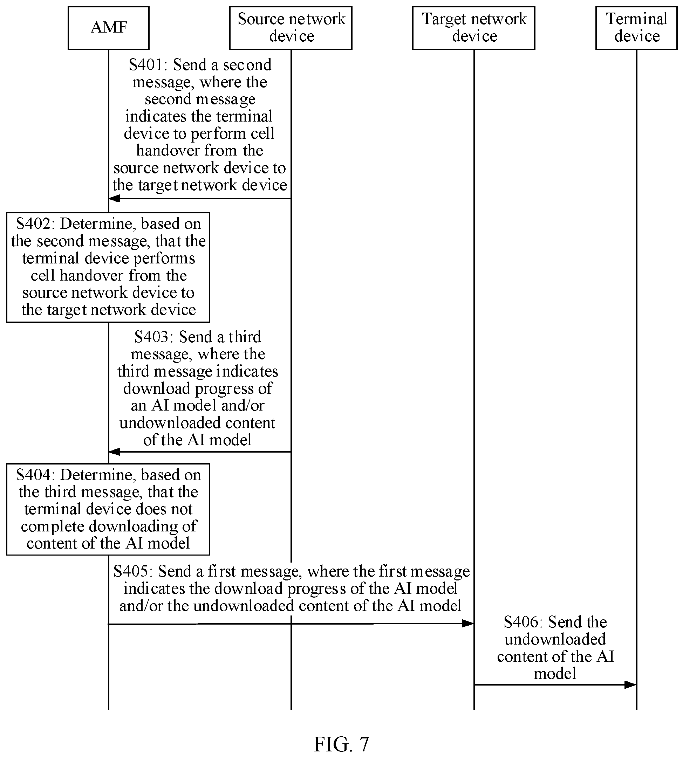

With reference to FIG. 7, the following describes a specific process in which the AMF implements the communication method in this application.

FIG. 7 is a flowchart of a communication method according to an embodiment of this application. As shown in FIG. 7, the communication method provided in this application may include the following steps.

S401: A source network device sends a second message to an AMF, where the second message indicates a terminal device to perform cell handover from the source network device to a target network device.

S402: The AMF determines, based on the second message, that the terminal device performs cell handover from the source network device to the target network device.

Based on the descriptions of S201, the source network device can learn whether the terminal device performs cell handover.

In this way, the source network device may send the second message to the AMF, to indicate, through the second message, the AMF that the terminal device performs cell handover from the source network device to the target network device.

In this way, the AMF may determine, based on the second message, that the terminal device performs cell handover from the source network device to the target network device.

A specific implementation of the second message is not limited in this application. For example, the second message may be represented in a form such as a letter, a digit, a character, or a binary.

S403: The source network device sends a third message to the AMF, where the third message indicates download progress of an AI model and/or undownloaded content of the AI model.

S404: The AMF determines, based on the third message, that the terminal device does not complete downloading of content of the AI model.

Based on the descriptions of S201, the source network device can determine whether the terminal device does not complete downloading of the content of the AI model.

In this way, the source network device may send the third message to the AMF, so that the source network device notifies the AMF of the download progress of the AI model and/or the undownloaded content of the AI model through the third message.

In this way, the AMF may determine, based on the third message, that the terminal device does not complete downloading of the content of the AI model.

A specific implementation of the third message is not limited in this application. For example, the third message may be represented in a form such as a letter, a digit, a character, or a binary. Alternatively, the third message may carry the undownloaded content of the AI model.

In addition, the second message and the third message may be sent through a same message, or may be sent through different messages. This is not limited in this application.

S405: The AMF sends a first message to the target network device.

An implementation of S405 is similar to the implementation of S103 in the embodiment shown in FIG. 4. Details are not described herein again in this application.

S406: The target network device sends the undownloaded content of the AI model to the terminal device.

An implementation of S406 is similar to the implementation of S104 in the embodiment shown in FIG. 4. Details are not described herein again in this application.

In this application, the AMF may serve as a communication apparatus, and transfer the download progress of the AI model and/or the undownloaded content of the AI model to the target network device through the first message, so that the target network device can send the undownloaded content of the AI model to the terminal device.

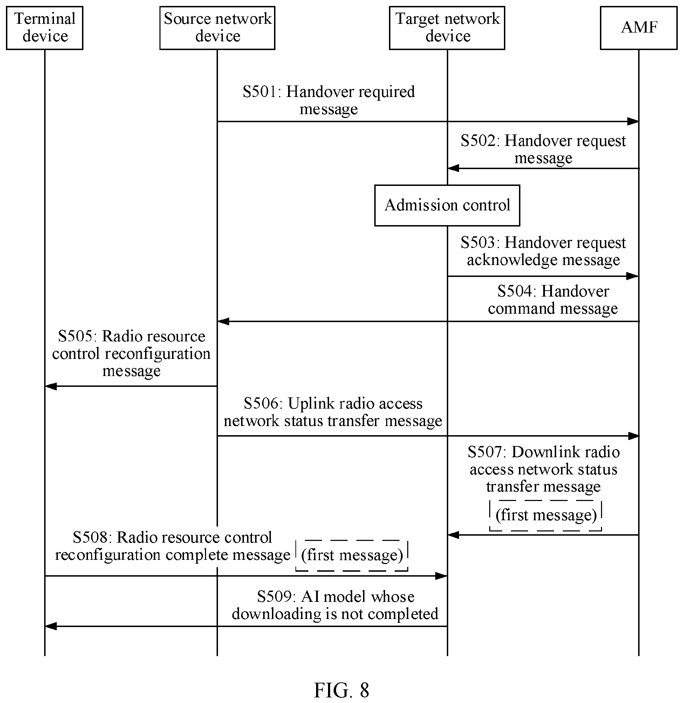

In a specific embodiment, an inter-gNB NG handover procedure is described with reference to FIG. 8.

FIG. 8 is a flowchart of a communication method according to an embodiment of this application.

In FIG. 8, a source network device and a target network device do not belong to a same AMF, or a source network device and a target network device belong to a same AMF, but there is no Xn link between the source network device and the target network device. Therefore, the source network device and the target network device need to communicate with each other through the AMF.

As shown in FIG. 8, when a terminal device is in an RRC connected mode, the inter-gNB NG handover procedure may include the following steps.

S501: The source network device sends a handover required (handover required) message to the AMF through an NG link. In this way, the AMF can determine that the terminal device performs cell handover.

The handover required message is used to initiate a cell handover request. The handover required message may include an ID of the target network device, a list of PDU sessions for performing data forwarding, and the like.

The handover required message may indicate the terminal device to perform cell handover from the source network device to the target network device. In this case, the handover required message may be considered as the second message mentioned above, or the handover required message includes the second message mentioned above.

In addition, the source network device may also send a newly added message to the AMF to indicate the terminal device to perform cell handover from the source network device to the target network device. In this case, the newly added message may be considered as the second message, or the newly added message includes the second message mentioned above.

S502: The AMF sends a handover request (handover request) message to the target network device.

The target network device is a target network device in which a target cell selected by the terminal device is located. The handover request message is used to initiate the cell handover request.

S503: After performing admission control (admission control), the target network device sends a handover request acknowledge (handover request acknowledge) message to the AMF.

The handover request acknowledge message indicates that the cell handover is allowed.

It should be understood that, if some PDU sessions fail to be handed over, the handover request acknowledge message needs to carry a list of failed PDU sessions.

S504: The AMF sends a handover command (handover command) message to the source network device through the NG link.

The handover command message includes an address and a list of tunnel endpoint identifiers (tunnel endpoint identifiers, TEIDs) used for forwarding, and the list of TEIDs includes a list of bearers that need to be released.

S505: The source network device sends a radio resource control reconfiguration (RRC reconfiguration) message to the terminal device.

The radio resource control reconfiguration message is used to request the terminal device to be handed over to the target cell.

S506: The source network device sends an uplink radio access network status transfer (uplink RAN status transfer) message to the AMF through the NG link.

The uplink radio access network status transfer message carries a PDCP SN serial number, and the PDCP SN serial number indicates to determine whether the terminal device completes downloading of content of an AI model.

The uplink radio access network status transfer message may further indicate download progress of the AI model and/or undownloaded content of the AI model. In this case, the uplink radio access network status transfer message may be considered as the third message mentioned above, or the uplink radio access network status transfer message includes the third message mentioned above.

In addition, the source network device may also send, to the AMF, a newly added message indicating the download progress of the AI model and/or the undownloaded content of the AI model. In this case, the newly added message may be considered as the third message, or the newly added message includes the third message mentioned above.

S507: The AMF sends a downlink radio access status transfer (downlink RAN status transfer) message to the target network device.

The AMF may determine, based on the PDCP SN serial number, whether the terminal device completes downloading of the content of the AI model.

When determining that the terminal device does not complete downloading of the content of the AI model, the AMF sends a first message to the target network device.

In some embodiments, the downlink radio access network status transfer message may indicate the download progress of the AI model and/or the undownloaded content of the AI model. In this case, the downlink radio access network status transfer message may be considered as the first message mentioned above, or the downlink radio access network status transfer message includes the first message mentioned above.

The downlink radio access network status transfer message may reuse the downlink radio access network status transfer message in the related technology, and a downlink radio access network status transfer message indicating a meaning of the download progress of the AI model and/or the undownloaded content of the AI model is newly added.

In some other embodiments, the AMF may send the downlink radio access network status transfer message and the newly added message to the target network device. The newly added message may indicate the download progress of the AI model and/or the undownloaded content of the AI model. In this case, the newly added message may be considered as the first message mentioned above, or the newly added message includes the first message mentioned above.

When determining that the terminal device completes downloading of the content of the AI model, the AMF may transfer, to the target network device, the content of the AI model whose downloading is completed by the terminal device, so that the target network device can learn that the content of the AI model does not need to be transmitted to the terminal device.

Alternatively, when determining that the terminal device completes downloading of the content of the AI model, the AMF may not transfer, to the target network device, the content of the AI model whose downloading is completed by the terminal device, so that the target network device does not need to transmit the content of the AI model to the terminal device by default.

S508: The terminal device sends a radio resource control reconfiguration complete (RRC reconfiguration complete) message to the target network device. In this way, the terminal device completes handover to the target cell on an air interface.

The terminal device completes cell handover from the source network device to the target network device. In this way, when the terminal device completes cell handover or after the terminal device completes cell handover, the terminal device successfully accesses the target network device, so that the terminal device and the target network device can communicate with each other.

S509: When receiving the downlink radio access network status transfer message or the newly added message in S507 that indicates the download progress of the AI model and/or the undownloaded content of the AI model, the target network device sends, after the terminal device completes cell handover, an AI model (namely, the undownloaded content of the AI model) that is not complete downloading ofed to the terminal device.

In addition, when receiving the downlink radio access network status transfer message or the newly added message in S507 that indicates that the terminal device completes downloading of the content of the AI model, the target network device may determine that the terminal device completes downloading of the content of the AI model. In this way, the target network device does not need to perform S509.

Alternatively, when the target network device does not receive the downlink radio access network status transfer message and the newly added message in S507 that indicate the download progress of the AI model and/or the undownloaded content of the AI model, the target network device may determine that the terminal device completes downloading of the content of the AI model. In this way, the target network device does not need to perform S509.

In conclusion, in the inter-gNB NG handover procedure, when determining that the terminal device performs cell handover and that transmission of the content of the AI model that needs to be downloaded by the terminal device to the terminal device is completed, the AMF may transfer the download progress of the AI model and/or the undownloaded content of the AI model to the target network device through the downlink radio access network status transfer message and/or the newly added message, so that the target network device can learn of how much content of the AI model and/or the undownloaded content of the AI model are/is downloaded by the terminal device from the source network device before the terminal device performs cell handover.

In this way, after the terminal device completes cell handover, the target network device may continue to transmit the undownloaded content of the AI model to the terminal device, to avoid a waste of air interface resources caused by re-downloading of the AI model.

When a communication apparatus is a primary network device, in a radio access network dual connectivity (multi rate dual connectivity, MR-DC) scenario, the communication apparatus is the primary network device, and both the source network device and the target network device are secondary network devices. In other words, the source network device is a source secondary network device, and the target network device is a target secondary network device. There is no communication interface between the source network device and the target network device, so that the source network device and the target network device cannot directly communicate with each other. In this way, the primary network device may serve as a communication bridge between the source network device and the target network device.

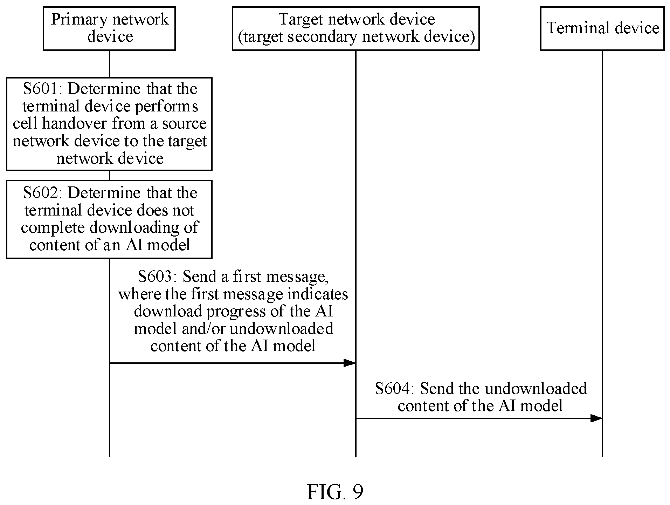

With reference to FIG. 9, the following describes a specific process in which the primary network device implements the communication method in this application.

FIG. 9 is a flowchart of a communication method according to an embodiment of this application. As shown in FIG. 9, the communication method provided in this application may include the following steps.

S601: A primary network device determines that a terminal device performs cell handover from a source network device to a target network device.

Based on the descriptions of S201, the source network device can learn whether the terminal device performs cell handover, and the source network device can determine whether the terminal device does not complete downloading of content of an AI model. In addition, related information of the foregoing procedure is synchronized between the source network device and the primary network device.

In this way, the primary network device can learn whether the terminal device performs cell handover, and the primary network device can determine whether the terminal device does not complete downloading of the content of the AI model.

In conclusion, the primary network device determines that the terminal device performs cell handover from the source network device to the target network device.

S602: The primary network device determines that the terminal device does not complete downloading of the content of the AI model.

Based on the descriptions of S601, the primary network device may determine that the terminal device does not complete downloading of the content of the AI model.

S603: The primary network device sends a first message to the target network device.

An implementation of S603 is similar to the implementation of S103 in the embodiment shown in FIG. 4. Details are not described herein again in this application.

S604: The target network device sends undownloaded content of the AI model to the terminal device.

An implementation of S604 is similar to the implementation of S104 in the embodiment shown in FIG. 4. Details are not described herein again in this application.

In this application, the primary network device may serve as a communication apparatus, and transfer download progress of the AI model and/or the undownloaded content of the AI model to the target network device through the first message, so that the target network device can send the undownloaded content of the AI model to the terminal device.

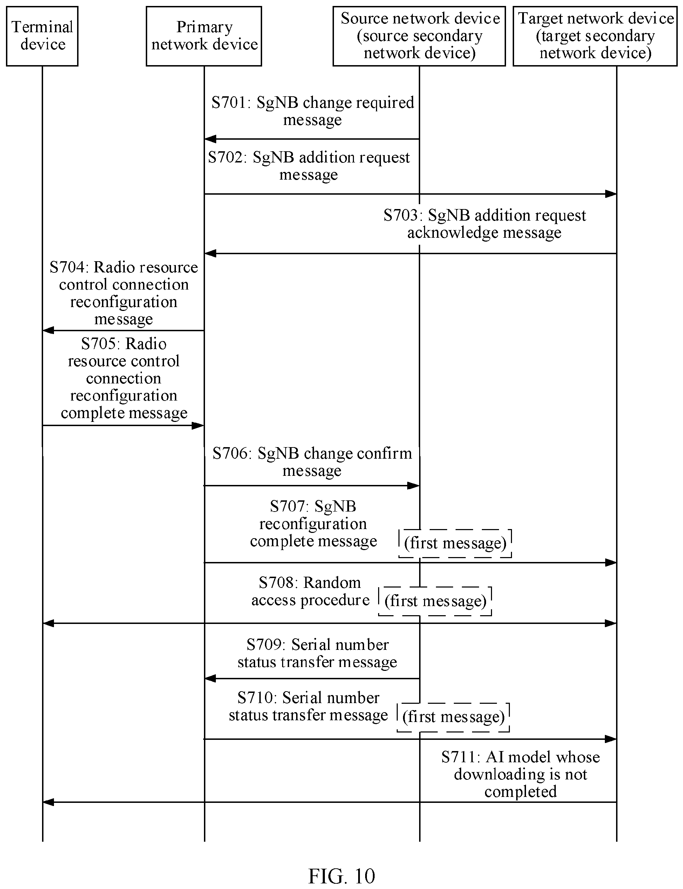

In a specific embodiment, with reference to FIG. 10, a handover procedure in an MR-DC scenario is described.

FIG. 10 is a flowchart of a communication method according to an embodiment of this application.

In FIG. 10, a source network device and a target network device need to communicate with each other through a primary network device.

As shown in FIG. 10, the handover procedure in the MR-DC scenario may include the following steps.

S701: The source network device sends a SgNB change required (SgNB change required) message to the primary network device.

The primary network device may learn that a terminal device performs cell handover. S701 is an optional step. Cell handover may be triggered by the source network device or the primary network device. If cell handover is triggered by the source network device, the source network device performs S701. If cell handover is triggered by the primary network device, S701 may be omitted.

The SgNB change required message is used to initiate a change procedure, and the SgNB change required message may include ID information of the target network device. In addition, the SgNB change required message may further include a secondary cell group (secondary cell group, SCG) configuration (supporting an incremental configuration) and a measurement result related to the target network device.

S702: The primary network device sends a SgNB addition request (SgNB addition request) message to the target network device.

S703: The target network device sends a SgNB addition request acknowledge (SgNB addition request acknowledge) message to the primary network device.

Based on S702 and S703, the primary network device requests, through a SgNB addition (SgNB addition) procedure, the target network device to allocate resources to the terminal device. The allocating resources to the terminal device may include: receiving, from the source network device, a measurement result related to the target network device.

In addition, if forwarding is needed, the target network device provides a forwarding address and an indication including a full-RRC configuration or an incremental RRC configuration for the primary network device.

S704: The primary network device sends a radio resource control connection reconfiguration (RRC connection reconfiguration) message to the terminal device.

S705: The terminal device sends a radio resource control connection reconfiguration complete (RRC connection reconfiguration complete) message to the primary network device.

Based on S704 and S705, the primary network device triggers the terminal device to apply a new configuration. The primary network device indicates the new configuration to the terminal device through a radio resource control connection reconfiguration message in an NR RRC configuration message generated by the target network device. If necessary, the terminal device applies the new configuration. The terminal device may send the radio resource control connection reconfiguration complete message to the primary network device. The radio resource control connection reconfiguration complete message sent by the primary network device may include an encoded NR RRC response message of the target network device.

In addition, if the terminal device cannot comply with a configuration (part or all) included in the radio resource control connection reconfiguration message, the terminal device performs a reconfiguration failure procedure.

S706: When the target network device successfully allocates resources, the primary network device determines to release a source network device resource. If data forwarding needs to be performed, the primary network device provides a data forwarding address for the source network device. If the source network device terminates direct data forwarding to be used by a bearer, the primary network device provides, for the source network device, the data forwarding address received from the target network device. In this way, the primary network device sends a SgNB change confirm (SgNB change confirm) message to the source network device.

The SgNB change confirm message is used to trigger the source network device to stop providing user data for the terminal device. In addition, the SgNB change confirm message is further used to start data forwarding in a proper case.

S707: If a radio resource control connection reconfiguration process succeeds, the primary network device sends a SgNB reconfiguration complete (SgNB reconfiguration complete) message to the target network device.

The SgNB reconfiguration complete message indicates reconfiguration completion.

The primary network device may further determine whether the terminal device completes downloading of content of an AI model.

When determining that the terminal device does not complete downloading of the content of the AI model, the primary network device sends a first message to the target network device.

In some embodiments, the SgNB reconfiguration complete message further indicates download progress of the AI model and/or undownloaded content of the AI model. In this case, the SgNB reconfiguration complete message may be considered as the first message mentioned above, or the SgNB reconfiguration complete message includes the first message mentioned above.

The SgNB reconfiguration complete message may use the SgNB reconfiguration complete message in the related technology, and a SgNB reconfiguration complete message indicating a meaning of the download progress of the AI model and/or the undownloaded content of the AI model is newly added.

In some other embodiments, the primary network device may send the SgNB reconfiguration complete message and the newly added message to the target network device. The newly added message may indicate the download progress of the AI model and/or the undownloaded content of the AI model. In this case, the newly added message may be considered as the first message mentioned above, or the newly added message includes the first message mentioned above.

When determining that the terminal device completes downloading of the content of the AI model, the primary network device may transfer, to the target network device, the content of the AI model whose downloading is completed by the terminal device, so that the target network device can learn that the content of the AI model does not need to be transmitted to the terminal device.

Alternatively, when determining that the terminal device completes downloading of the content of the AI model, the primary network device may not transfer, to the target network device, the content of the AI model whose downloading is completed by the terminal device, so that the target network device does not need to transmit the content of the AI model to the terminal device by default.

S708: The terminal device synchronizes with the target network device through a random access procedure (random access procedure).

The terminal device completes cell handover from the source network device to the target network device. In this way, when the terminal device completes cell handover or after the terminal device completes cell handover, the terminal device successfully accesses the target network device, so that the terminal device and the target network device can communicate with each other.

S709: The source network device that uses an RLC acknowledged mode (acknowledged mode, AM) terminates a bearer, and the source network device sends a serial number status transfer (SN status transfer) message to the primary network device.

The serial number status transfer message indicates that the secondary network device changes. In addition, if necessary, the primary network device sends the serial number status transfer message to the target network device.

S710: The primary network device sends the serial number status transfer message to the target network device.

The serial number status transfer message is used to transfer a status.

The primary network device may further determine whether the terminal device completes downloading of content of an AI model.

When determining that the terminal device does not complete downloading of the content of the AI model, the primary network device sends a first message to the target network device.

In some embodiments, the serial number status transfer message further indicates the download progress of the AI model and/or the undownloaded content of the AI model. In this case, the serial number status transfer message is the first message mentioned above.

The serial number status transfer message may reuse the serial number status transfer message in the related technology, and a serial number status transfer message indicating a meaning of the download progress of the AI model and/or the undownloaded content of the AI model is newly added.

In some other embodiments, the primary network device may send the serial number status transfer message and the newly added message to the target network device. The newly added message may indicate the download progress of the AI model and/or the undownloaded content of the AI model. In this case, the newly added message may be considered as the first message mentioned above, or the newly added message includes the first message mentioned above.

When determining that the terminal device completes downloading of the content of the AI model, the primary network device may transfer, to the target network device, the content of the AI model whose downloading is completed by the terminal device, so that the target network device can learn that the content of the AI model does not need to be transmitted to the terminal device.

Alternatively, when determining that the terminal device completes downloading of the content of the AI model, the primary network device may not transfer, to the target network device, the content of the AI model whose downloading is completed by the terminal device, so that the target network device does not need to transmit the content of the AI model to the terminal device by default.

It should be understood that, one or more messages may be selected from the SgNB reconfiguration complete message and the newly added message in S707, and the serial number status transfer message and the newly added message in S710 to indicate the download progress of the AI model and/or the undownloaded content of the AI model. This is not limited in this application.

S711: When receiving one or more messages in the SgNB reconfiguration complete message in S707, the newly added message in S707, the serial number status transfer message in S710, or the newly added message in S710 that indicate the download progress of the AI model and/or the undownloaded content of the AI model, the target network device sends, after the terminal device completes cell handover, an AI model (namely, the undownloaded content of the AI model) that is not complete downloading ofed to the terminal device.

In addition, when receiving one or more messages in the SgNB reconfiguration complete message in S707, the newly added message in S707, the serial number status transfer message in S710, or the newly added message in S710 that indicate that the terminal device completes downloading of the content of the AI model, the target network device may determine that the terminal device completes downloading of the content of the AI model. In this way, the target network device does not need to perform S306.

Alternatively, when the target network device does not receive the SgNB reconfiguration complete message in S707, the newly added message in S707, the serial number status transfer message in S710, and the newly added message in S710 that indicate the download progress of the AI model and/or the undownloaded content of the AI model, the target network device may determine that the terminal device completes downloading of the content of the AI model. In this way, the target network device does not need to perform S306.

In conclusion, in the handover procedure in the MR-DC scenario, when determining that the terminal device performs cell handover and that transmission of the content of the AI model that needs to be downloaded by the terminal device to the terminal device is completed, the primary network device may transfer the download progress of the AI model and/or the undownloaded content of the AI model to the target network device through the SgNB reconfiguration complete message or the serial number status transfer message and/or the newly added message, so that the target network device can learn of how much content of the AI model and/or the undownloaded content of the AI model are/is downloaded by the terminal device from the source network device before the terminal device performs cell handover.

In this way, after the terminal device completes cell handover, the target network device may continue to transmit the undownloaded content of the AI model to the terminal device, to avoid a waste of air interface resources caused by re-downloading of the AI model.

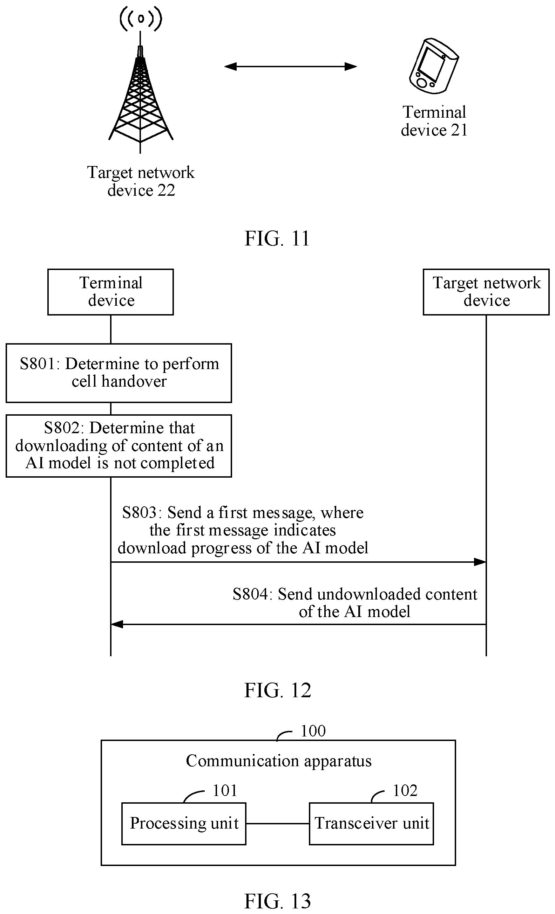

FIG. 11 is a diagram of an architecture of a communication network according to an embodiment of this application. When a communication apparatus is a terminal device 21, the terminal device 21 may communicate with a target network device 22. For example, the terminal device 21 may trigger the target network device 22 to send content of an AI model to the terminal device 21, and the target network device 22 sends the content of the AI model to the terminal device 21.

For the terminal device 21, refer to the foregoing descriptions of the terminal device mentioned above. For the target network device 22, refer to the foregoing descriptions of the network device mentioned above. For the AI model, refer to the foregoing descriptions of the AI model mentioned above. Details are not described herein again.

In the following embodiments of this application, a communication method provided in this application is described in detail below with reference to the accompanying drawings and an application scenario by using the terminal device 21 and the target network device 22 that have the structure shown in FIG. 11 as an example.

FIG. 12 is a flowchart of a communication method according to an embodiment of this application. As shown in FIG. 12, the communication method provided in this application may include the following steps.

S801: A terminal device determines to perform cell handover.

For a specific implementation of performing cell handover by the terminal device, refer to the descriptions of performing cell handover by the terminal device shown in S101 in the embodiment in FIG. 4. Details are not described herein again.

S802: The terminal device determines that content of an AI model is not complete downloading ofed.

For a specific implementation of determining, by the terminal device, the content of the AI model that is not downloaded, refer to the descriptions of determining, by a communication apparatus, the content of the AI model that is not complete downloading ofed in S102 in the embodiment in FIG. 4. Details are not described herein again.

S803: The terminal device sends a first message to a target network device, where the first message indicates download progress of the AI model.

The target network device is a network device to which the terminal device is handed over after the terminal device completes cell handover. In other words, when the terminal device completes cell handover or after the terminal device completes cell handover, the terminal device successfully accesses the target network device, so that the terminal device and the target network device can communicate with each other. For a specific implementation of the target network device, refer to the foregoing descriptions of the network device mentioned above. Details are not described herein again.

When determining that the content of the AI model is not complete downloading ofed, the terminal device may learn of downloaded content of the AI model received by the terminal device, but cannot learn of undownloaded content of the AI model. Therefore, the terminal device may send the first message to the target network device, and can transfer the download progress of the AI model to the target network device through the first message, so that the target network device can learn of the downloaded content of the AI model.

For a specific implementation of the first message in S803, refer to S103 in the embodiment in FIG. 4 and the foregoing descriptions of the first message indicating the download progress of the AI model mentioned above. Details are not described herein again.

In addition, it is considered that in a process in which the terminal device performs cell handover, the terminal device and the target network device cannot communicate with each other. Therefore, the first message is sent by the terminal device to the target network device when the terminal device completes cell handover or after the terminal device completes cell handover.

S804: The target network device sends the undownloaded content of the AI model to the terminal device.

Based on the first message in S803, after the terminal device completes cell handover, the target network device may send the undownloaded content of the AI model to the terminal device. In this way, a waste of a large quantity of air interface resources caused by repeated downloading of the AI model is avoided.

The target network device may pre-store the content of the AI model that needs to be downloaded by the terminal device, and then the target network device may obtain the undownloaded content of the AI model. Alternatively, the terminal device may send the undownloaded content of the AI model to the target network device. Alternatively, the target network device may obtain the undownloaded content of the AI model from another network element other than the terminal device.

According to the communication method provided in this application, when completing cell handover or after completing cell handover, the terminal device transfers the download progress of the AI model to the target network device through the first message, so that the target network device can learn of how much content (namely, the downloaded content of the AI model) of the AI model downloaded by the terminal device from the source network device. Then, after the terminal device completes cell handover, the target network device may send the undownloaded content of the AI model to the terminal device. In this way, a waste of a large quantity of air interface resources caused by repeated downloading of the AI model is avoided.

Based on the descriptions of the embodiment in FIG. 12, the terminal device, serving as the communication apparatus, may implement the communication method in this application, and the communication method in this application may be applicable to various handover scenarios such as inter-gNB Xn handover, inter-gNB NG handover, MgNB handover, SgNB handover, and an MR-DC scenario.

With reference to FIG. 6, FIG. 8, and FIG. 10, a procedure of implementing various handover scenarios by the terminal device is described.

As shown in FIG. 6, in the inter-gNB Xn handover procedure, different from a case in which the source network device transfers the download progress of the AI model and/or the undownloaded content of the AI model to the target network device through the serial number status transfer message in S304, the terminal device may send the first message mentioned in FIG. 12 to the target network device when completing cell handover or after completing cell handover.

In some embodiments, when completing cell handover, the terminal device may transfer the download progress of the AI model to the target network device through the radio resource control reconfiguration complete message in S305.

The radio resource control reconfiguration complete message may indicate the download progress of the AI model. In this case, the radio resource control reconfiguration complete message may be considered as the first message mentioned in FIG. 12, or the radio resource control reconfiguration complete message includes the first message mentioned in FIG. 12.

In some other embodiments, after S305 (that is, after completing cell handover), the terminal device may transfer the download progress of the AI model to the target network device through the newly added message.

The newly added message may indicate the download progress of the AI model. In this case, the newly added message may be considered as the first message mentioned in FIG. 12, or the newly added message includes the first message mentioned in FIG. 12.

Correspondingly, in S306, when receiving the radio resource control reconfiguration complete message in S305 or when the newly added message sent after S305 indicates the download progress of the AI model, the target network device sends, after the terminal device completes cell handover, an AI model (namely, the undownloaded content of the AI model) that is not complete downloading ofed to the terminal device.

As shown in FIG. 8, in the inter-gNB NG handover procedure, different from a case in which the AMF transfers the download progress of the AI model and/or the undownloaded content of the AI model to the target network device through the downlink radio access network status transfer message in S507, the terminal device may send the first message mentioned in FIG. 12 to the target network device when completing cell handover or after completing cell handover.

In some embodiments, when completing cell handover, the terminal device may transfer the download progress of the AI model to the target network device through the radio resource control reconfiguration complete message in S508.

The radio resource control reconfiguration complete message may indicate the download progress of the AI model. In this case, the radio resource control reconfiguration complete message may be considered as the first message mentioned in FIG. 12, or the radio resource control reconfiguration complete message includes the first message mentioned in FIG. 12.

In some other embodiments, after S508 (that is, after completing cell handover), the terminal device may transfer the download progress of the AI model to the target network device through the newly added message.

The newly added message may indicate the download progress of the AI model. In this case, the newly added message may be considered as the first message mentioned in FIG. 12, or the newly added message includes the first message mentioned in FIG. 12.

Correspondingly, in S509, when receiving the radio resource control reconfiguration complete message in S508 or when the newly added message sent after S508 indicates the download progress of the AI model, the target network device sends, after the terminal device completes cell handover, an AI model (namely, the undownloaded content of the AI model) that is not complete downloading ofed to the terminal device.

As shown in FIG. 10, in the handover procedure in the MR-DC scenario, different from a case in which the primary network device transfers the download progress of the AI model and/or the undownloaded content of the AI model to the target network device through the SgNB reconfiguration complete message in S707 or the serial number status transfer message in S710, the terminal device may send the first message mentioned in FIG. 12 to the target network device when completing cell handover or after completing cell handover.

In some embodiments, when completing cell handover, the terminal device may transfer the download progress of the AI model to the target network device through a message in the random access procedure in S708 or a newly added message sent after S708.

The message in the random access procedure may indicate the download progress of the AI model. In this case, the message in the random access procedure may be considered as the first message mentioned in FIG. 12, or the message in the random access procedure includes the first message mentioned in FIG. 12.

In some other embodiments, after S708 (that is, after completing cell handover), the terminal device may transfer the download progress of the AI model to the target network device through the newly added message.

The newly added message may indicate the download progress of the AI model. In this case, the newly added message may be considered as the first message mentioned in FIG. 12, or the newly added message includes the first message mentioned in FIG. 12.

Correspondingly, in S711, when receiving the message in S708 or when the message sent after S708 indicates the download progress of the AI model, the target network device sends, after the terminal device completes cell handover, an AI model (namely, the undownloaded content of the AI model) that is not complete downloading ofed to the terminal device.

In addition, the first message mentioned in FIG. 12 and the first message mentioned in FIG. 4 to FIG. 10 are usually sent through different messages. For example, any one of the source network device, the AMF, the primary network device, or the terminal device may transfer, to the target network device by reusing an existing message in the related technology, content indicated by the first message.

Alternatively, the first message mentioned in FIG. 12 and the first message mentioned in FIG. 4 to FIG. 10 may be sent through a same message. For example, any one of the source network device, the AMF, the primary network device, or the terminal device may transfer, to the target network device through a newly added same message, content indicated by the first message.

Based on the descriptions of the embodiments in FIG. 3 to FIG. 12, transmission of the first message may be performed through a signaling radio bearer (signaling radio bearer, SRB) or a data radio bearer (data radio bearer, DRB).

The SRB is a radio bearer used to perform transmission on an RRC message and a network attached storage (network attached storage, NAS) message. The DRB is a radio bearer used to perform transmission on user data. There is only one type of DRB. According to a protocol, each terminal device has a maximum of eight DRBs used to perform transmission on different services.

When transmission of the first message is performed through the SRB between the terminal device and the target network device, the SRB may be one or more of an SRB 0, an SRB 1, an SRB 2, an SRB 3, or an SRB 4.

The SRB 0, the SRB 1, the SRB 2, the SRB 3, and the SRB 4 are existing SRBs in the related technology.

The SRB 0 is used to carry RRC signaling before an RRC connection is successfully established. Transmission of the RRC signaling is performed through a common control channel (common control channel, CCCH) logic channel in a transparent mode (transparent mode, TM) at an RLC layer.

The SRB 1 is used to carry the RRC signaling after the RRC connection is successfully established and NAS signaling before the SRB 2 is established. Transmission of the RRC signaling and the NAS signaling is performed through a dedicated control channel (dedicated control channel, DCCH) logic channel in an AM at the RLC layer.

The SRB 2 is used to carry the NAS signaling and an RRC message for recording measurement information. Transmission of the NAS signaling and the RRC message is performed through the DCCH logic channel in the AM at the RLC layer. A priority of the SRB 2 is lower than that of the SRB 1. The SRB 2 can be established only after a security mode is activated.

The SRB 3 is used to carry a specific RRC message when the terminal device is in (NG) EN-DC or NR-DC, and transmission of the specific RRC message is performed through the DCCH logical channel.

The (NG) EN-DC (E-UTRA NR dual connectivity with covering E-UTRA connected to EPC or 5GC) is E-UTRANR dual connectivity, and is E-UTRA that covers an EPC or a 5GC connection. The EPC (evolved packet core) is a covered packet core network. The EN-DC (E-UTRANR dual connectivity with E-UTRA connected to EPC) is E-UTRA and NR dual connectivity with the E-UTRA connected to the EPC. The E-UTRA (evolved universal terrestrial radio access) is evolved universal terrestrial radio access. The NR-DC, namely, NR-NR DC refers to 5G and 5G dual connectivity.

The SRB 4 is used for an RRC message including application layer measurement report information. All messages use the DCCH logical channel. The SRB 4 can only be configured by a network after AS security is activated.

Alternatively, the SRB may be one or more SRBs other than an SRB 0, an SRB 1, an SRB 2, an SRB 3, and an SRB 4, for example, a newly introduced SRB 5.

When transmission of the first message is performed through a DRB on an air interface between the terminal device and the target network device, after a PDU session between the target network device, the terminal device, and a core network element is established, the target network device initiates a DRB establishment procedure, and the terminal device establishes the DRB.

The core network element may include a network element participating in PDU session establishment, for example, an AMF and a user plane function entity (user plane function, UPF).

Alternatively, after the target network device receives the first message, the target network device initiates a DRB establishment procedure, and the terminal device establishes the DRB.

It can be learned that, a difference between the foregoing two manners of establishing the DRB lies in whether the core network element participates.

Corresponding to the methods provided in the foregoing method embodiments, this application further provides a corresponding communication apparatus (sometimes also referred to as a communication device) and a communication system. The communication apparatus includes a corresponding module or unit configured to perform each part in the foregoing embodiments. The module or unit may be software, hardware, or a combination of software and hardware. The following briefly describes the communication apparatus and the communication system by using examples. For details about solution implementation, refer to the descriptions in the foregoing method embodiments. Details are not described below again.

For example, this application further provides a communication apparatus.

FIG. 13 is a diagram of a structure of a communication apparatus according to an embodiment of this application.

As shown in FIG. 13, the communication apparatus 100 may exist independently, or may be integrated into another device, and may communicate with the network device mentioned above, to implement operations corresponding to the communication apparatus in the method embodiments in FIG. 1 to FIG. 10.

The communication apparatus 100 may include a processing unit 101 and a transceiver unit 102. The processing unit 101 is configured to perform data processing. The transceiver unit 102 may implement a corresponding communication function. The transceiver unit 102 may also be referred to as a communication interface or a communication unit.

Optionally, the communication apparatus 100 may further include a storage unit. The storage unit may be configured to store instructions and/or data. The processing unit 101 may read the instructions and/or the data in the storage unit, to enable the communication apparatus 100 to implement the foregoing method embodiments.

The communication apparatus 100 may be configured to perform an action performed by the communication apparatus in the foregoing method embodiments. The communication apparatus 100 may be a communication apparatus or a component that can be configured in the communication apparatus. The processing unit 101 is configured to perform a processing-related operation of the communication apparatus in the foregoing method embodiment. The transceiver unit 102 is configured to perform a receiving-related operation of the communication apparatus in the foregoing method embodiment.

Optionally, the transceiver unit 102 may include a sending unit and a receiving unit. The sending unit is configured to perform a sending operation in the foregoing method embodiments. The receiving unit is configured to perform a receiving operation in the foregoing method embodiments.

It should be noted that, the communication apparatus 100 may include the sending unit, but does not include the receiving unit, or the communication apparatus 100 may include the receiving unit, but does not include the sending unit. Specifically, this may depend on whether the foregoing solution performed by the communication apparatus 100 includes a sending action and a receiving action.

In an example, the communication apparatus 100 is configured to perform an action performed by the communication apparatus in the embodiment shown in FIG. 4.

The communication apparatus 100 may include a processing unit 101 and a transceiver unit 102.

The processing unit 101 is configured to determine that a terminal device performs cell handover.

The processing unit 101 is further configured to determine that the terminal device does not complete downloading of content of an artificial intelligence model.

The transceiver unit 102 is configured to send a first message to a target network device, where the target network device is a network device to which the terminal device is handed over after the terminal device completes cell handover, and the first message indicates download progress of the artificial intelligence model and/or undownloaded content of the artificial intelligence model, to trigger the target network device to send the undownloaded content of the artificial intelligence model to the terminal device.

In some embodiments, the communication apparatus 100 is a source network device.

The transceiver unit 102 is further configured to: before the communication apparatus 100 determines that the terminal device performs cell handover, send the content of the artificial intelligence model to the terminal device.

The processing unit 101 is configured to determine that the terminal device performs cell handover from the source network device to the target network device.

In some embodiments, the communication apparatus 100 is an access and mobility management function entity;
the transceiver unit 102 is further configured to: before the communication apparatus determines that the terminal device performs cell handover, receive a second message sent by a source network device, where the second message indicates the terminal device to perform cell handover from the source network device to the target network device;
the processing unit 101 is configured to determine, based on the second message, that the terminal device performs cell handover from the source network device to the target network device;
the transceiver unit 102 is further configured to: before the communication apparatus determines that the terminal device does not complete downloading of the content of the artificial intelligence model, receive a third message sent by the source network device, where the third message indicates the download progress of the artificial intelligence model and/or the undownloaded content of the artificial intelligence model; and
the processing unit 101 is configured to determine, based on the third message, that the terminal device does not complete downloading of the content of the artificial intelligence model.

In some embodiments, the communication apparatus 100 is a primary network device, and both the source network device and the target network device are secondary network devices. The processing unit 101 is configured to determine that the terminal device performs cell handover from the source network device to the target network device.

It should be understood that, the foregoing corresponding processes performed by the units are described in detail in the foregoing method embodiments. For brevity, details are not described herein again.

The processing unit 101 in the foregoing embodiments may be implemented by at least one processor or a processor-related circuit. The transceiver unit 102 may be implemented by a transceiver or a transceiver-related circuit. The transceiver unit 102 may also be referred to as a communication unit or a communication interface. The storage unit may be implemented by at least one storage.

For example, this application further provides a communication apparatus.

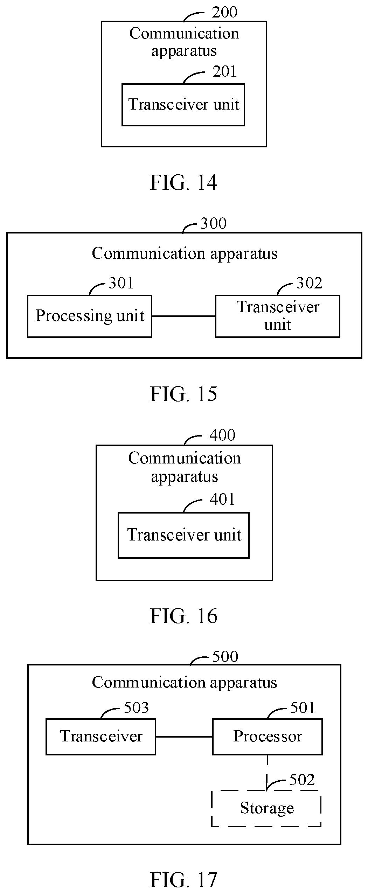

FIG. 14 is a diagram of a structure of a communication apparatus according to an embodiment of this application.

As shown in FIG. 14, the communication apparatus 200 may exist independently, or may be integrated into another device, and may communicate with the communication apparatus mentioned above, to implement operations corresponding to the target network device in the method embodiments in FIG. 1 to FIG. 10.

The communication apparatus 200 may include a transceiver unit 201. The communication apparatus 200 may further include a processing unit. The transceiver unit 201 may implement a corresponding communication function, and the processing unit is configured to process data. The transceiver unit 201 may also be referred to as a communication interface or a communication unit.

Optionally, the communication apparatus 200 may further include a storage unit. The storage unit may be configured to store instructions and/or data. The processing unit may read the instructions and/or the data in the storage unit, to enable the communication apparatus 200 to implement the foregoing method embodiments.

The communication apparatus 200 may be configured to perform an action performed by the target network device in the foregoing method embodiments. The communication apparatus 200 may be a target network device or a component that can be configured in the target network device. The transceiver unit 201 is configured to perform a receiving-related operation of the target network device in the foregoing method embodiments, and the processing unit is configured to perform a processing-related operation of the target network device in the foregoing method embodiments.

Optionally, the transceiver unit 201 may include a sending unit and a receiving unit. The sending unit is configured to perform a sending operation in the foregoing method embodiments. The receiving unit is configured to perform a receiving operation in the foregoing method embodiments.

It should be noted that, the communication apparatus 200 may include the sending unit, but does not include the receiving unit, or the communication apparatus 200 may include the receiving unit, but does not include the sending unit. Specifically, this may depend on whether the foregoing solution performed by the communication apparatus 200 includes a sending action and a receiving action.

In an example, the communication apparatus 200 is configured to perform an action performed by the target network device in the embodiment shown in FIG. 4.

The communication apparatus 200 may include a transceiver unit 201.

The transceiver unit 201 is configured to receive a first message sent by a communication apparatus, where the first message is sent by the communication apparatus when the communication apparatus determines that a terminal device performs cell handover and determines that the terminal device does not complete downloading of content of an artificial intelligence model, and the first message indicates download progress of the artificial intelligence model and/or undownloaded content of the artificial intelligence model.

The transceiver unit 201 is further configured to send the undownloaded content of the artificial intelligence model to the terminal device.

In some embodiments, the communication apparatus 200 is a source network device.

The first message is sent by the source network device when the source network device determines that the terminal device performs cell handover from the source network device to the target network device, and determines that the terminal device does not complete downloading of the content of the artificial intelligence model.

In some embodiments, the communication apparatus 200 is an access and mobility management function entity.

The first message is sent by the access and mobility management function entity when the access and mobility management function entity determines, based on a second message, that the terminal device performs cell handover from a source network device to the target network device, and determines, based on a third message, that the terminal device does not complete downloading of the content of the artificial intelligence model, the second message and the third message are received by the access and mobility management function entity from the source network device, the second message indicates the terminal device to perform cell handover from the source network device to the target network device, and the third message indicates the download progress of the artificial intelligence model and/or the undownloaded content of the artificial intelligence model.

In some embodiments, the communication apparatus 200 is a primary network device, and both the source network device and the target network device are secondary network devices.

The first message is sent by the primary network device when the primary network device determines that the terminal device performs cell handover from the source network device to the target network device, and determines that the terminal device does not complete downloading of the content of the artificial intelligence model.

It should be understood that, the foregoing corresponding processes performed by the units are described in detail in the foregoing method embodiments. For brevity, details are not described herein again.

The processing unit in the foregoing embodiments may be implemented by at least one processor or a processor-related circuit. The transceiver unit 201 may be implemented by a transceiver or a transceiver-related circuit. The transceiver unit may also be referred to as a communication unit or a communication interface. The storage unit may be implemented by at least one storage.

For example, this application further provides a communication apparatus.

FIG. 15 is a diagram of a structure of a communication apparatus according to an embodiment of this application.

As shown in FIG. 15, the communication apparatus 300 may exist independently, or may be integrated into another device, and may communicate with the network device mentioned above, to implement operations corresponding to the terminal device in the method embodiments in FIG. 1, FIG. 2, FIG. 11, and FIG. 12.

The communication apparatus 300 may include a processing unit 301 and a transceiver unit 302. The processing unit 301 is configured to perform data processing. The transceiver unit 302 may implement a corresponding communication function. The transceiver unit 302 may also be referred to as a communication interface or a communication unit.

Optionally, the communication apparatus 300 may further include a storage unit. The storage unit may be configured to store instructions and/or data. The processing unit 301 may read the instructions and/or the data in the storage unit, to enable the communication apparatus 300 to implement the foregoing method embodiments.

The communication apparatus 300 may be configured to perform an action performed by the terminal device in the foregoing method embodiments. The communication apparatus 300 may be a terminal device or a component that can be configured in the terminal device. The processing unit 301 is configured to perform a processing-related operation of the terminal device in the foregoing method embodiment. The transceiver unit 302 is configured to perform a receiving-related operation of the terminal device in the foregoing method embodiment.

Optionally, the transceiver unit 302 may include a sending unit and a receiving unit. The sending unit is configured to perform a sending operation in the foregoing method embodiments. The receiving unit is configured to perform a receiving operation in the foregoing method embodiments.

It should be noted that, the communication apparatus 300 may include the sending unit, but does not include the receiving unit, or the communication apparatus 300 may include the receiving unit, but does not include the sending unit. Specifically, this may depend on whether the foregoing solution performed by the communication apparatus 300 includes a sending action and a receiving action.

In an example, the communication apparatus 300 is configured to perform an action performed by the terminal device in the embodiment shown in FIG. 12.

The communication apparatus 300 may include a processing unit 301 and a transceiver unit 302.

The processing unit 301 is configured to determine to perform cell handover.

The processing unit 301 is further configured to determine that content of an artificial intelligence model is not complete downloading ofed.

The transceiver unit 302 is configured to send a first message to a target network device, where the target network device is a network device to which the terminal device is handed over after the terminal device completes cell handover, and the first message indicates download progress of the artificial intelligence model.

The transceiver unit 302 is further configured to receive undownloaded content that is of the artificial intelligence model and that is sent by the target network device.

In some embodiments, the transceiver unit 302 is further configured to: before the terminal device determines to perform cell handover, receive the content of the artificial intelligence model from the source network device.

The processing unit 301 is configured to determine to perform cell handover from the source network device to the target network device.

It should be understood that, the foregoing corresponding processes performed by the units are described in detail in the foregoing method embodiments. For brevity, details are not described herein again.

The processing unit 301 in the foregoing embodiments may be implemented by at least one processor or a processor-related circuit. The transceiver unit 302 may be implemented by a transceiver or a transceiver-related circuit. The transceiver unit 302 may also be referred to as a communication unit or a communication interface. The storage unit may be implemented by at least one storage.

For example, this application further provides a communication apparatus.

FIG. 16 is a diagram of a structure of a communication apparatus according to an embodiment of this application.

As shown in FIG. 16, the communication apparatus 400 may exist independently, or may be integrated into another device, and may communicate with the terminal device mentioned above, to implement operations corresponding to the target network device in the method embodiments in FIG. 1, FIG. 2, FIG. 11, and FIG. 12.

The communication apparatus 400 may include a transceiver unit 401. The communication apparatus 400 may further include a processing unit. The transceiver unit 401 may implement a corresponding communication function, and the processing unit is configured to process data. The transceiver unit 401 may also be referred to as a communication interface or a communication unit.

Optionally, the communication apparatus 400 may further include a storage unit. The storage unit may be configured to store instructions and/or data. The processing unit may read the instructions and/or the data in the storage unit, to enable the communication apparatus 400 to implement the foregoing method embodiments.

The communication apparatus 400 may be configured to perform an action performed by the target network device in the foregoing method embodiments. The communication apparatus 400 may be a target network device or a component that can be configured in the target network device. The transceiver unit 401 is configured to perform a receiving-related operation of the target network device in the foregoing method embodiments, and the processing unit is configured to perform a processing-related operation of the target network device in the foregoing method embodiments.

Optionally, the transceiver unit 401 may include a sending unit and a receiving unit. The sending unit is configured to perform a sending operation in the foregoing method embodiments. The receiving unit is configured to perform a receiving operation in the foregoing method embodiments.

It should be noted that, the communication apparatus 400 may include the sending unit, but does not include the receiving unit. Alternatively, the communication apparatus 400 may include the receiving unit, but does not include the sending unit. Specifically, this may depend on whether the foregoing solution performed by the communication apparatus 400 includes a sending action and a receiving action.

In an example, the communication apparatus 400 is configured to perform an action performed by the target network device in the embodiment shown in FIG. 12.

The communication apparatus 400 may include a transceiver unit 401.

The transceiver unit 401 is configured to receive a first message sent by a terminal device, where the first message is sent by the terminal device when the terminal device determines to perform cell handover and determines that content of an artificial intelligence model is not complete downloading ofed, and the first message indicates download progress of the artificial intelligence model.

The transceiver unit 401 is further configured to send the undownloaded content of the artificial intelligence model to the terminal device.

It should be understood that, the foregoing corresponding processes performed by the units are described in detail in the foregoing method embodiments. For brevity, details are not described herein again.

The processing unit in the foregoing embodiments may be implemented by at least one processor or a processor-related circuit. The transceiver unit 401 may be implemented by a transceiver or a transceiver-related circuit. The transceiver unit may also be referred to as a communication unit or a communication interface. The storage unit may be implemented by at least one storage.

In some embodiments of FIG. 13 to FIG. 16, the first message includes a first bit, and the first bit indicates a location until which the content of the artificial intelligence model is downloaded.

In some embodiments of FIG. 13 to FIG. 16, the content of the artificial intelligence model includes M segments, and M is an integer greater than or equal to 2; and
the first message includes an identifier and a bit of a k^{th} segment, and k is a positive integer, where
the identifier of the k^{th} segment indicates a segment until which the content of the artificial intelligence model is downloaded, and the bit of the k^{th} segment indicates a location until which the content of the artificial intelligence model is downloaded in the k^{th} segment.

In some embodiments of FIG. 13 to FIG. 16, the content of the artificial intelligence model includes M segments, and M is an integer greater than or equal to 2; and
the first message includes one or more of the following representation manners:
an identifier, a second bit, a start bit, and an end bit of each segment in a segment set; or
an identifier, a second bit, a start bit, and a total quantity of bits of each segment in a segment set; or
an identifier, a second bit, an end bit, and a total quantity of bits of each segment in a segment set, where
the segment set includes one or more segments in the M segments in which downloaded content exists, the identifier of each segment indicates each segment, and the second bit of each segment indicates a location until which the content of the artificial intelligence model is downloaded in each segment; or
the segment set includes the M segments, the identifier of each segment indicates each segment, and the second bit of each segment indicates a location until which the content of the artificial intelligence model is downloaded in each segment.

In some embodiments of FIG. 13 to FIG. 16, the first message further includes an identifier of the artificial intelligence model.

In some embodiments of FIG. 13 to FIG. 16, the first message further includes a segment quantity M of the content of the artificial intelligence model.

In some embodiments of FIG. 13 and FIG. 14, the first message includes: the undownloaded content of the artificial intelligence model; or the identifier of the artificial intelligence model and the undownloaded content of the artificial intelligence model.

In some embodiments of FIG. 13 to FIG. 16, transmission of the first message is performed through a signaling radio bearer or a data radio bearer.

In some embodiments of FIG. 13 to FIG. 16, transmission of the first message is performed through the signaling radio bearer between the terminal device and the target network device;
the signaling radio bearer is one or more of a signaling radio bearer 0, a signaling radio bearer 1, a signaling radio bearer 2, a signaling radio bearer 3, or a signaling radio bearer 4; or
the signaling radio bearer is one or more signaling radio bearers other than a signaling radio bearer 0, a signaling radio bearer 1, a signaling radio bearer 2, a signaling radio bearer 3, and a signaling radio bearer 4.

In some embodiments of FIG. 13 to FIG. 16, transmission of the first message is performed through a data radio bearer on an air interface between the terminal device and the target network device;
establishment of the data radio bearer is initiated by the target network device after a protocol data unit session between the target network device, the terminal device, and a core network element is established; or establishment of the data radio bearer is initiated by the target network device after the target network device receives the first message.

In this application, functional modules of the communication apparatus may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, this application further provides a communication apparatus.

FIG. 17 is a diagram of a hardware structure of a communication apparatus according to an embodiment of this application.

The communication apparatus 500 includes a processor 501. The processor 501 is coupled to a storage 502. The storage 502 is configured to store a computer program or instructions and/or data. The processor 501 is configured to execute the computer program or instructions and/or the data stored in the storage 502, to perform the method in the foregoing method embodiments.

Optionally, the communication apparatus 500 includes one or more processors 501.

Optionally, as shown in FIG. 17, the communication apparatus 500 may further include the storage 502.

Optionally, the communication apparatus 500 includes one or more storages 502.

Optionally, the storage 502 and the processor 501 may be integrated together, or separately disposed.

As shown in FIG. 17, the communication apparatus 500 may further include a transceiver 503. The transceiver 503 is configured to receive and/or send a signal. For example, the processor 501 is configured to control the transceiver 503 to receive and/or send the signal.

In a solution, the communication apparatus 500 is configured to implement an operation performed by the communication apparatus in the foregoing method embodiments.

For example, the processor 501 is configured to implement a processing-related operation performed by the communication apparatus in the foregoing method embodiment, and the transceiver 503 is configured to implement a receiving and sending-related operation performed by the communication apparatus in the foregoing method embodiment.

In another solution, the communication apparatus 500 is configured to implement an operation performed by the terminal device in the foregoing method embodiments.

For example, the processor 501 is configured to implement a processing-related operation performed by the terminal device in the foregoing method embodiment, and the transceiver 503 is configured to implement a receiving and sending-related operation performed by the terminal device in the foregoing method embodiment.

In another solution, the communication apparatus 500 is configured to implement an operation performed by the target network device in the foregoing method embodiments.

For example, the processor 501 is configured to implement a processing-related operation performed by the target network device in the foregoing method embodiment, and the transceiver 503 is configured to implement a transceiver-related operation performed by the target network device in the foregoing method embodiment.

In the communication apparatus shown in FIG. 17, a component that is in the transceiver 503 and that is configured to receive power may be considered as a receiving unit, and a component that is in the transceiver 503 and that is configured to implement a sending function may be considered as a sending unit. That is, the transceiver 503 may include a receiver and a transmitter. The transceiver 503 may also be referred to as a transceiver machine, a transceiver unit, a transceiver circuit, or the like. The receiver may also be referred to as a receiver machine, a receiving unit, a receiver, a receive circuit, or the like. The transmitter may also be referred to as a transmitter machine, a transmitter, a transmitting unit, a transmit circuit, or the like. The processor 501 has a processing function, and the processor 501 may be referred to as a processing unit. The storage 502 is configured to store computer program code and data, and the storage 502 may also be referred to as a storage unit.

For example, this application further provides a communication apparatus.

The communication apparatus 600 may be a communication apparatus, a terminal device, or a target network device, or may be a communication apparatus, a terminal device, or a chip of a target network device. The communication apparatus 600 may be configured to perform operations performed by the communication apparatus, the terminal device, or the target network device in the foregoing method embodiments.

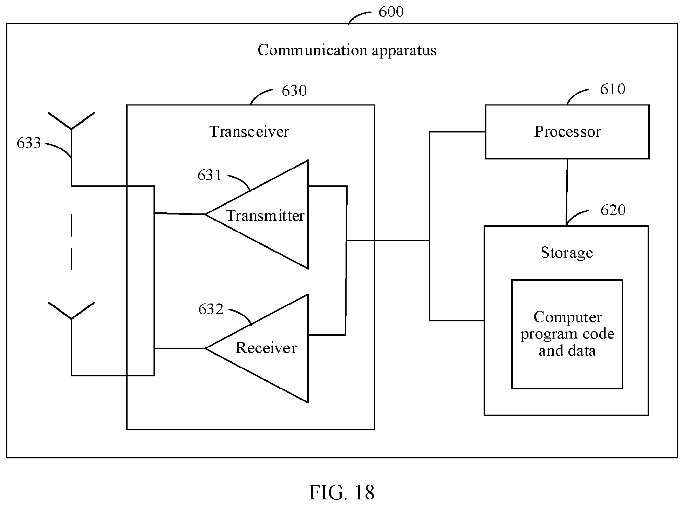

FIG. 18 is a diagram of a hardware structure of a communication apparatus according to an embodiment of this application.

The communication apparatus 600 includes a part 610, a part 620, and a part 630. The part 610 is mainly configured to perform baseband processing, control a base station, and the like. The part 610 is usually a control center of the base station, and may be usually referred to as a processor or a processing unit, and is configured to control the communication apparatus, the terminal device, or the target network device to perform a processing operation on a side of the communication apparatus, the terminal device, or the target network device in the foregoing method embodiments. The part 620 is mainly configured to store computer program code and data, and may usually be a storage or a storage unit. The part 630 is mainly configured to receive and send a radio frequency signal, and perform conversion between a radio frequency signal and a baseband signal. The part 630 may be usually referred to as a transceiver unit, a transceiver machine, a transceiver circuit, a transceiver, or the like. The transceiver unit in the part 630 may also be referred to as the transceiver machine, the transceiver, or the like, and includes an antenna 633 and a radio frequency circuit (not shown in the figure). The radio frequency circuit is mainly configured to perform radio frequency processing. Optionally, in the part 630, a component configured to implement a receiving function may be considered as a receiver, and a component configured to implement a sending function may be considered as a transmitter. In other words, the part 630 includes a receiver 632 and a transmitter 631. The receiver may also be referred to as a receiving unit, a receiver, a receiving circuit, or the like, and the transmitter may be referred to as a transmitting unit, a sending unit, a transmitter, a transmitting circuit, or the like.

The part 610 and the part 620 may include one or more boards, and each board may include one or more processors and one or more storages. The processor is configured to read and execute a program in the storage, to implement a baseband processing function and control the base station. If there are a plurality of boards, the boards may be interconnected with each other to enhance a processing capability. In an optional implementation, a plurality of boards may share one or more processors, or a plurality of boards share one or more storages, or a plurality of boards share one or more processors at the same time.

In an implementation, the transceiver unit in the part 630 is configured to perform a receiving and sending-related process performed by the communication apparatus or the target network device in the embodiment shown in FIG. 4. The processor in the part 610 is configured to perform a processing-related process performed by the communication apparatus or the target network device in the embodiment shown in FIG. 4.

In another implementation, the transceiver unit in the part 630 is configured to perform a receiving and sending-related process performed by the terminal device or the target network device in the embodiment shown in FIG. 12. The processor in the part 610 is configured to perform a processing-related process performed by the terminal device or the target network device in the embodiment shown in FIG. 12.

It should be understood that, FIG. 18 is merely an example rather than a limitation. The communication apparatus, the terminal device, or the target network device that includes the processor, the storage, and the transceiver may not depend on the structure shown in FIG. 18.

When the communication apparatus 600 is the chip, the chip includes a transceiver, a storage, and a processor. The transceiver may be an input/output circuit or a communication interface. The processor is a processor, a microprocessor, or an integrated circuit integrated on the chip. **In** the foregoing method embodiments, a sending operation of the communication apparatus, the terminal device, or the target network device may be understood as an output of a chip, and a receiving operation of the communication apparatus, the terminal device, or the target network device in the foregoing method embodiments may be understood as an input of the chip.

For example, this application further provides a computer-readable storage medium, and the computer-readable storage medium stores computer instructions used to implement the method performed by the communication apparatus, the terminal device, or the target network device, or the method performed by the network device in the foregoing method embodiments.

For example, when the computer program is executed by a computer, the computer is enabled to implement the method performed by the communication apparatus, the method performed by the terminal device, or the method performed by the target network device in the foregoing method embodiments.

For example, this application further provides a computer program product including instructions. When the instructions are executed by a computer, the computer is enabled to implement the method performed by the communication apparatus, the method performed by the terminal device, or the method performed by the target network device in the foregoing method embodiments.

For example, this application further provides a communication system. The communication system includes a communication apparatus and a target network device. For the communication system, refer to the communication system shown in the embodiment in FIG. 3. Alternatively, the communication system includes a terminal device and a target network device. For the communication system, refer to the communication system shown in the embodiment in FIG. 11.

For example, this application further provides a chip apparatus, including a processor, configured to invoke a computer program or computer instructions stored in a memory, to enable the processor to perform the method in the foregoing embodiments.

In a possible implementation, an input of the chip apparatus corresponds to a receiving operation in the foregoing embodiment, and an output of the chip apparatus corresponds to a sending operation in the foregoing embodiment.

Optionally, the processor is coupled to the memory over an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control execution of a program of the method in the foregoing embodiments. The memory mentioned anywhere above may be a read-only memory (read-only memory, ROM), another type of static storage device that can store static information and instructions, a random access memory (random access memory, RAM), or the like.

It may be clearly understood by a person skilled in the art that, for convenience and brevity of description, for explanations and beneficial effect of related content in any one of the communication apparatuses provided above, refer to the corresponding method embodiments provided above. Details are not described herein again.

In this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented over some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the part essentially contributing to the technical solutions of this application or all or some of the technical solutions may be implemented in a form of a software product. The computer software product is stored in a storage medium and includes a plurality of instructions for instructing a computer device (which may be a personal computer, a server, or a network device) to perform all or some of the processes of the methods in embodiments of this application. The foregoing storage medium includes any medium that can store program code, for example, a USB flash disk, a removable hard disk, a read-only memory, a random access memory, a magnetic disk, or an optical disc.

The foregoing embodiments are merely used to describe the technical solutions of this application, but not to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
determining, by a communication apparatus, that a terminal device performs cell handover;
determining, by the communication apparatus, that the terminal device does not complete downloading of content of an artificial intelligence model; and
sending, by the communication apparatus, a first message to a target network device, wherein the target network device is a network device to which the terminal device is handed over after the terminal device completes cell handover, and the first message indicates download progress of the artificial intelligence model and/or undownloaded content of the artificial intelligence model, to trigger the target network device to send the undownloaded content of the artificial intelligence model to the terminal device.

2. The method according to claim 1, wherein the communication apparatus is a source network device;
before the determining, by a communication apparatus, that a terminal device performs cell handover, the method further comprises:
sending, by the source network device, the content of the artificial intelligence model to the terminal device;
the determining, by a communication apparatus, that a terminal device performs cell handover comprises:
determining, by the source network device, that the terminal device performs cell handover from the source network device to the target network device;
the determining, by the communication apparatus, that the terminal device does not complete downloading of content of an artificial intelligence model comprises:
determining, by the source network device, that the terminal device does not complete downloading of the content of the artificial intelligence model; and
the sending, by the communication apparatus, a first message to a target network device comprises:
sending, by the source network device, the first message to the target network device.

3. The method according to claim 1, wherein the communication apparatus is an access and mobility management function entity;
before the determining, by a communication apparatus, that a terminal device performs cell handover, the method further comprises:
receiving, by the access and mobility management function entity, a second message sent by a source network device, wherein the second message indicates the terminal device to perform cell handover from the source network device to the target network device;
the determining, by a communication apparatus, that a terminal device performs cell handover comprises:
determining, by the access and mobility management function entity based on the second message, that the terminal device performs cell handover from the source network device to the target network device;
before the determining, by the communication apparatus, that the terminal device does not complete downloading of content of an artificial intelligence model, the method further comprises:
receiving, by the access and mobility management function entity, a third message sent by the source network device, wherein the third message indicates the download progress of the artificial intelligence model and/or the undownloaded content of the artificial intelligence model;
the determining, by the communication apparatus, that the terminal device does not complete downloading of content of an artificial intelligence model comprises:
determining, by the access and mobility management function entity based on the third message, that the terminal device does not complete downloading of the content of the artificial intelligence model; and
the sending, by the communication apparatus, a first message to a target network device comprises:
sending, by the access and mobility management function entity, the first message to the target network device.

4. The method according to claim 1, wherein the communication apparatus is a primary network device, and both a source network device and the target network device are secondary network devices;
the determining, by a communication apparatus, that a terminal device performs cell handover comprises:
determining, by the primary network device, that the terminal device performs cell handover from the source network device to the target network device;
the determining, by the communication apparatus, that the terminal device does not complete downloading of content of an artificial intelligence model comprises:
determining, by the primary network device, that the terminal device does not complete downloading of the content of the artificial intelligence model; and
the sending, by the communication apparatus, a first message to a target network device comprises:
sending, by the primary network device, the first message to the target network device.

5. A communication method, wherein the method comprises:
receiving, by a target network device, a first message sent by a communication apparatus, wherein the first message is sent by the communication apparatus when the communication apparatus determines that a terminal device performs cell handover and determines that the terminal device does not complete downloading of content of an artificial intelligence model, and the first message indicates download progress of the artificial intelligence model and/or undownloaded content of the artificial intelligence model; and
sending, by the target network device, the undownloaded content of the artificial intelligence model to the terminal device.

6. The method according to claim 5, wherein the communication apparatus is a source network device; and
the first message is sent by the source network device when the source network device determines that the terminal device performs cell handover from the source network device to the target network device, and determines that the terminal device does not complete downloading of the content of the artificial intelligence model.

7. The method according to claim 5, wherein the communication apparatus is an access and mobility management function entity; and
the first message is sent by the access and mobility management function entity when the access and mobility management function entity determines, based on a second message, that the terminal device performs cell handover from a source network device to the target network device, and determines, based on a third message, that the terminal device does not complete downloading of the content of the artificial intelligence model, the second message and the third message are received by the access and mobility management function entity from the source network device, the second message indicates the terminal device to perform cell handover from the source network device to the target network device, and the third message indicates the download progress of the artificial intelligence model and/or the undownloaded content of the artificial intelligence model.

8. The method according to claim 5, wherein the communication apparatus is a primary network device, and both a source network device and the target network device are secondary network devices; and
the first message is sent by the primary network device when the primary network device determines that the terminal device performs cell handover from the source network device to the target network device, and determines that the terminal device does not complete downloading of the content of the artificial intelligence model.

9. A communication method, wherein the method comprises:
determining, by a terminal device, to perform cell handover;
determining, by the terminal device, that content of an artificial intelligence model is not complete downloading ofed;
sending, by the terminal device, a first message to a target network device, wherein the target network device is a network device to which the terminal device is handed over after the terminal device completes cell handover, and the first message indicates download progress of the artificial intelligence model; and
receiving, by the terminal device, undownloaded content that is of the artificial intelligence model and that is sent by the target network device.

10. The method according to claim 9, wherein before the determining, by a terminal device, to perform cell handover, the method further comprises:
receiving, by the terminal device, the content of the artificial intelligence model from a source network device; and
the determining, by a terminal device, to perform cell handover comprises:
determining, by the terminal device, to perform cell handover from the source network device to the target network device.

11. A communication method, wherein the method comprises:
receiving, by a target network device, a first message sent by a terminal device, wherein the first message is sent by the terminal device when the terminal device determines to perform cell handover and determines that content of an artificial intelligence model is not complete downloading ofed, and the first message indicates download progress of the artificial intelligence model; and
sending, by the target network device, undownloaded content of the artificial intelligence model to the terminal device.

12. The method according to any one of claims 1 to 11, wherein the first message comprises a first bit, and the first bit indicates a location until which the content of the artificial intelligence model is downloaded.

13. The method according to any one of claims 1 to 11, wherein the content of the artificial intelligence model comprises M segments, and M is an integer greater than or equal to 2; and
the first message comprises an identifier and a bit of a k^{th} segment, and k is a positive integer, wherein
the identifier of the k^{th} segment indicates a segment until which the content of the artificial intelligence model is downloaded, and the bit of the k^{th} segment indicates a location until which the content of the artificial intelligence model is downloaded in the k^{th} segment.

14. The method according to any one of claims 1 to 11, wherein the content of the artificial intelligence model comprises M segments, and M is an integer greater than or equal to 2; and
the first message comprises one or more of the following representation manners:
an identifier, a second bit, a start bit, and an end bit of each segment in a segment set; or
an identifier, a second bit, a start bit, and a total quantity of bits of each segment in a segment set; or
an identifier, a second bit, an end bit, and a total quantity of bits of each segment in a segment set, wherein
the segment set comprises one or more segments in the M segments in which downloaded content exists, the identifier of each segment indicates each segment, and the second bit of each segment indicates a location until which the content of the artificial intelligence model is downloaded in each segment; or
the segment set comprises the M segments, the identifier of each segment indicates each segment, and the second bit of each segment indicates a location until which the content of the artificial intelligence model is downloaded in each segment.

15. The method according to any one of claims 12 to 14, wherein the first message further comprises an identifier of the artificial intelligence model.

16. The method according to claim 13 or 14, wherein the first message further comprises a segment quantity M of the content of the artificial intelligence model.

17. The method according to any one of claims 1 to 8 and 12 to 16, wherein the first message comprises: the undownloaded content of the artificial intelligence model; or the identifier of the artificial intelligence model and the undownloaded content of the artificial intelligence model.

18. The method according to any one of claims 1 to 17, wherein transmission of the first message is performed through a signaling radio bearer or a data radio bearer.

19. The method according to claim 18, wherein transmission of the first message is performed through the signaling radio bearer between the terminal device and the target network device;
the signaling radio bearer is one or more of a signaling radio bearer 0, a signaling radio bearer 1, a signaling radio bearer 2, a signaling radio bearer 3, or a signaling radio bearer 4; or
the signaling radio bearer is one or more signaling radio bearers other than a signaling radio bearer 0, a signaling radio bearer 1, a signaling radio bearer 2, a signaling radio bearer 3, and a signaling radio bearer 4.

20. The method according to claim 18, wherein transmission of the first message is performed through a data radio bearer on an air interface between the terminal device and the target network device;
establishment of the data radio bearer is initiated by the target network device after a protocol data unit session between the target network device, the terminal device, and a core network element is established; or
establishment of the data radio bearer is initiated by the target network device after the target network device receives the first message.

21. A communication apparatus, wherein the apparatus comprises a module configured to perform the method according to any one of claims 1 to 4 and 12 to 20; or a module configured to perform the method according to any one of claims 5 to 8 and 12 to 20; or a module configured to perform the method according to any one of claims 9, 10, 12 to 16, and 18 to 20; or a module configured to perform the method according to any one of claims 11 to 16 and 18 to 20.

22. A communication apparatus, comprising a processor, wherein
the processor is configured to execute a computer-executable program or instructions in a memory, to enable the communication apparatus to perform the method according to any one of claims 1 to 4 and 12 to 20; or enable the communication apparatus to perform the method according to any one of claims 5 to 8 and 12 to 20; or enable the communication apparatus to perform the method according to any one of claims 9, 10, 12 to 16, and 18 to 20; or enable the communication apparatus to perform the method according to any one of claims 11 to 16 and 18 to 20.

23. A computer-readable storage medium, wherein the computer-readable storage medium stores a computer-executable program or instructions, and the computer-executable program or the instructions are set to perform the method according to any one of claims 1 to 4 and 12 to 20; or the computer-executable program or the instructions are set to perform the method according to any one of claims 5 to 8 and 12 to 20; or the computer-executable program or the instructions are set to perform the method according to any one of claims 9, 10, 12 to 16, and 18 to 20; or the computer-executable program or the instructions are set to perform the method according to any one of claims 11 to 16 and 18 to 20.

24. A chip, comprising an interface circuit and a logic circuit, wherein the interface circuit is configured to receive a signal from another chip other than the chip and transmit the signal to the logic circuit, or send a signal from the logic circuit to another chip other than the chip, and the logic circuit is configured to implement the method according to any one of claims 1 to 4 and 12 to 20; or the logic circuit is configured to implement the method according to any one of claims 5 to 8 and 12 to 20; or the logic circuit is configured to implement the method according to any one of claims 9, 10, 12 to 16, and 18 to 20; or the logic circuit is configured to implement the method according to any one of claims 11 to 16 and 18 to 20.
